# EUROPÄISCHE PATENTSCHRIFT

(11) **EP 2 958 300 B1**
(45) Veröffentlichungstag und Bekanntmachung des Hinweises auf die Patenterteilung: **29.03.2017**
(21) Anmeldenummer: 14173255.2
(22) Anmeldetag: 20.06.2014
(51) Int. Cl.: H04L 29/08, H04W 4/00, H04W 84/20, H04W 88/04, H04L 29/14, H04W 40/22

(54) **Verfahren und Vorrichtung zur Sicherstellung und Optimierung des Datenaustausches in mobiler M2M Kommunikation bei eingeschränkter Connectivity**
Method and device for ensuring and optimizing the exchange of data in mobile M2M communication with limited connectivity
Procédé et dispositif de sauvegarde et d'optimisation de transmission de données dans une communication machine-machine mobile en cas de connectivité limitée

(43) Veröffentlichungstag der Anmeldung: 23.12.2015
(73) Patentinhaber: Deutsche Telekom AG, 53113 Bonn (DE)
(72) Erfinder: Steigerwald, Wolfgang, 10555 Berlin (DE); Mildner, Frank, 64331 Weiterstadt (DE); Friese, Ingo, 14195 Berlin (DE)
(74) Vertreter: Vossius & Partner Patentanwälte Rechtsanwälte mbB

(56) Entgegenhaltungen:
- US-A1- 2011 107 084
- US-A1- 2013 260 678

## Beschreibung

### Technisches Gebiet

Die vorliegende Erfindung bezieht sich allgemein auf das Gebiet mobiler M2M Kommunikation, insbesondere bei eingeschränkter Konnektivität zur Sicherstellung und Optimierung der Datenübertragung.

### Hintergrund der Erfindung

Mobile Prozesse werden oft mittels Datenanalyse und Prozesssteuerung in der Cloud überwacht und gesteuert.

Eine wesentliche Voraussetzung dafür ist eine mobile M2M Kommunikation basierend auf Konnektivität zwischen mobilen Prozesselementen (Peers) und dem Backend zur Sicherstellung der Datenübertragung von den Peers (Datenquellen) zum Backend (Datensenke) und zur Nachrichten Übermittlung vom Backend zu den Peers.

Heutige Verfahren funktionieren nur mit online Konnektivität mit hoher Bandbreite z.B. basierend auf öffentlichen 3/4G Mobilfunknetzen.

Bei fehlender Konnektivität zum Backend oder zu geringer Bandbreite ist keine Datenübertragung zum Backend oder Nachrichtenübertragung zu den Peers und damit keine Steuerung und Datenanalyse in Prozessen möglich.

Durch weitere Automatisierung in der sogenannten Industrie 4.0 ist mit immer höheren Datenmengen zwischen Backend und Peers zu rechnen. Andererseits ist eine Reduzierung der zu übertragenden Datenmengen notwendig um kurze Erreichbarkeitszeitschlitze effektiv zu nutzen.

Dadurch wird die Übertragung großer redundanter Datenmengen durch fehlende Koordination immer problematischer und führt unweigerlich zu Prozessunterbrechungen. Weiterhin kann es zu sogenannten Monitoring Folgeschäden kommen, da nur bei Konnektivität aller mobilen Einheiten die derzeitigen mobilen Produktionsprozesse reibungslos arbeiten können.

Aus der US 2013/0260678 A1 ist ein Verfahren zum Austausch von Daten zwischen mobilen Einheiten und einem Backend über ein lokales Ad hoc Netzwerk bekannt.

### Zusammenfassung der Erfindung

Die der vorliegenden Erfindung zu Grunde liegende Aufgabe besteht darin, ein Verfahren und eine Vorrichtung bereitzustellen, das bei eingeschränkter oder fehlender Connectivity der mobilen Einheiten zum Backend und/oder bei einer für eine Datenübertragung zu geringer Bandbreite einen alternativen Datenaustausch zur Verfügung stellt.

Diese Aufgabe wir mit den Merkmalen der unabhängigen Patentansprüche gelöst. Die abhängigen Patentansprüche beziehen sich auf weitere Aspekte der Erfindung.

Desweiteren ist mittels der Erfindung über ein Ad hoc Netzwerk zwischen den Peers eine Daten- Replikation und -synchronisation möglich. Das Verfahren und die Vorrichtung der vorliegenden Erfindung wird durch ein spezielles Protokoll zur Minimierung und Organisation des zu übertragenden Datenvolumens zwischen Peers und zwischen Peers und Backend unterstützt. Ferner werden sowohl Backendprozesse als auch Peerprozesse zum Datenmanagement bereitgestellt.

Die vorliegende Erfindung stellt ein Verfahren zum Senden von Daten von mindestens einer mobilen Einheit, insbesondere von mindestens einem Peer, an ein Backend-System bei eingeschränkter Konnektivität zwischen der mobilen Einheit und dem Backend-System bereit, wobei die mobile Einheit eine lokale Datenbank aufweist zum Speichern von eigenen Daten und vorzugsweise zum Zwischenspeichern von Daten mindestens einer weiteren mobilen Einheit. Die mobile Einheit erstellt einen lokalen Index entsprechend den gespeicherten eigenen Daten und vorzugsweise den zwischengespeicherten Daten, wobei das Backend-System eine Master-Datenbank aufweist zum Speichern von empfangenen Daten von mindestens einer mobilen Einheit, wobei das Backend-System einen Master-Index entsprechend den gespeicherten Daten erstellt, wobei das Verfahren bei vorhandener Konnektivität zwischen der mindestens einen mobilen Einheit und dem Backend-System die folgenden Schritte ausführt: Empfangen des Master-Index von dem Backend-System; Löschen der Daten der lokalen Datenbank, die in der Master-Datenbank enthalten sind anhand eines Vergleiches des lokalen Index mit dem Master-Index und Aktualisieren des lokalen Index; Senden von in der lokalen Datenbank gespeicherten Daten, die in der Master-Datenbank noch nicht enthalten sind; Empfangen und Speichern eines neuen Master-Indexes von dem Backend-System; und Löschen der zuvor gesendeten Daten der lokalen Datenbank anhand eines Vergleiches des aktualisierten lokalen Index mit dem neuen Master-Index und erneutes Aktualisieren des lokalen Index.

Ferner stellt die vorliegenden Erfindung ein Verfahren zum Empfangen von Daten von mindestens einer mobilen Einheit, insbesondere von mindestens einem Peer, an einem Backend-System bei eingeschränkter Konnektivität zwischen der mobilen Einheit und dem Backend-System bereit, wobei das Backend-System eine Master-Datenbank aufweist zum Speichern von empfangenen Daten von mindestens einer mobilen Einheit. Ferner erstellt das Backend-System einen Master-Index entsprechend den gespeicherten Daten, wobei das Verfahren bei vorhandener Konnektivität zwischen der mindestens einen mobilen Einheit und dem Backend-System die folgenden Schritte ausführt: Senden des Master-Index an die mobile Einheit; Empfangen von neuen Daten von der mobilen Einheit, die sich nicht in der Master-Datenbank befinden; Speichern der neuen Daten in der Master-Datenbank; Aktualisieren des Master-Indexes über die in der Master-Datenbank gespeicherten Daten; und Senden des neuen Master-Indexes an die mobile Einheit.

Die vorliegende Erfindung stellt ferner ein Verfahren zur Übermittlung von Daten von mindestens einer mobilen Einheit, insbesondere von mindestens einem Peer, an ein Backend-System bei eingeschränkter Konnektivität zwischen der mobilen Einheit und dem Backend-System bereit, wobei die mobile Einheit eine lokale Datenbank aufweist zum Speichern von eigenen Daten und vorzugsweise zum Zwischenspeichern von Daten mindestens einer weiteren mobilen Einheit. Die mobile Einheit erstellt einen lokalen Index entsprechend den gespeicherten eigenen Daten und vorzugsweise den zwischengespeicherten Daten, wobei das Backend-System eine Master-Datenbank aufweist zum Speichern von empfangenen Daten von mindestens einer mobilen Einheit, wobei das Backend-System einen Master-Index entsprechend den gespeicherten Daten erstellt, wobei das Verfahren bei vorhandener Konnektivität zwischen der mindestens einen mobilen Einheit und dem Backend-System sowohl die oben genannten Schritte des Verfahrens zum Senden von Daten als auch die Schritte des Verfahrens zum Empfangen von Daten ausführt.

In einem weiteren Aspekt stellt die vorliegenden Erfindung ein Verfahren zum Austausch von für ein Backend-System bestimmter Daten zwischen mindestens zwei mobilen Einheiten, insbesondere zwischen mindestens zwei Peers, bei eingeschränkter Konnektivität zwischen den mobilen Einheiten und dem Backend-System bereit, wobei die mobilen Einheiten jeweils eine lokale Datenbank aufweisen zum Speichern von eigenen Daten und vorzugsweise zum Zwischenspeichern von Daten mindestens einer weiteren mobilen Einheit. Die mobilen Einheiten erstellen jeweils einen lokalen Index entsprechend den gespeicherten eigenen Daten und vorzugsweise den zwischengespeicherten Daten, wobei die mobilen Einheiten jeweils einen Master-Index entsprechend den gespeicherten Daten des Backend-Systems zum Zeitpunkt des letzten Datenaustauschs zwischen der jeweiligen mobilen Einheit und dem Backend-System besitzen, wobei das Verfahren bei nicht vorhandener Konnektivität zwischen den mindestens zwei mobilen Einheiten und dem Backend-System die folgenden Schritte ausführt: Herstellen eines ad-hoc Netzwerks zwischen den mindestens zwei mobilen Einheiten; Austauschen der Master-Indexe und der lokalen Indexe; Löschen des älteren der jeweiligen Master-Indexe und Speichern des aktuelleren Master-Indexes; Löschen der Daten aus den lokalen Datenbanken der mobilen Einheiten, welche bereits an das Backend gesendet wurden, anhand eines Vergleiches des aktuellen Master-Indexes mit den lokalen Indexen, und Aktualisieren der jeweiligen lokalen Indexe; Aktualisieren der lokalen Indexe über die in der lokalen Datenbank der jeweiligen mobilen Einheit gespeicherten Daten; und Senden von zusätzlichen in den lokalen Datenbanken der mobilen Einheiten befindlichen Daten an die jeweils andere mobile Einheit, sodass die lokalen Datenbanken identische Daten enthalten, welche noch nicht an das Backend gesendet wurden und erneutes Aktualisieren der jeweiligen lokalen Indexe.

In einem weiteren Aspekt der vorliegenden Erfindung wird ein Verfahren zur Übermittlung von Daten von mindestens zwei mobilen Einheiten, insbesondere mindestens zwei Peers, an ein Backend-System bei eingeschränkter Konnektivität zwischen den mobilen Einheiten und dem Backend-System bereitgestellt, wobei das Backend-System einen Master-Index entsprechend den gespeicherten Daten erstellt, wobei die mobilen Einheiten jeweils eine lokale Datenbank aufweisen zum Speichern von eigenen Daten und vorzugsweise zum Zwischenspeichern von Daten mindestens einer weiteren mobilen Einheit. Die mobilen Einheiten erstellen jeweils einen lokalen Index entsprechend den gespeicherten eigenen Daten und vorzugsweise den zwischengespeicherten Daten, wobei die mobilen Einheiten jeweils einen Master-Index entsprechend den gespeicherten Daten des Backend-Systems zum Zeitpunkt des letzten Datenaustauschs zwischen der jeweiligen mobilen Einheit und dem Backend-System besitzen, wobei das Verfahren bei vorhandener Konnektivität zwischen mindestens einer mobilen Einheit und dem Backend-System die oben aufgeführten Schritte zum Senden und Empfangen bei vorhandener Konnektivität ausführt und wobei das Verfahren bei nicht vorhandener Konnektivität zwischen mindestens einer mobilen Einheit und dem Backend-System die oben aufgeführten Schritte zum Austausch von Daten ausführt.

Der Master Index des Backend-Systems und der Lokale Index der mobilen Einheit wird vorzugsweise in einer Quittungsdatei gespeichert.

Das ad-hoc Netzwerk zwischen den mobilen Einheiten wird vorzugsweise über WLAN oder nichtlizensierte ISM Bänder (Industry, Scientific, Medical) hergestellt.

In einem weiteren Aspekt stellt die vorliegende Erfindung ein Verfahren zum Senden von Nachrichten von einem Backend-System an mindestens eine mobile Einheit, insbesondere mindestens einen Peer, bei eingeschränkter Konnektivität zwischen der mobilen Einheit und dem Backend-System bereit, wobei die mobile Einheit eine lokale Datenbank aufweist zum Speichern von Nachrichten und vorzugsweise zum Zwischenspeichern von Nachrichten an mindestens eine weitere mobile Einheit. Die mobile Einheit erstellt einen lokalen Index entsprechend den lokal gespeicherten Nachrichten und vorzugsweise der zwischengespeicherten Nachrichten, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit. Das Backend-System erstellt einen Master-Index entsprechend den bereits gesendeten Nachrichten, wobei das Verfahren bei vorhandener Konnektivität zwischen der mindestens einen mobilen Einheit und dem Backend-System die folgenden Schritte ausführt: Senden des Master-Index an die mit dem Backend-System verbundene mobile Einheit; Empfangen von mindestens einem Empfangsindex und des lokalen Indexes; Löschen aller bereits empfangenen Nachrichten aus der Master-Datenbank des Backend-Systems, aufgrund des mindestens einen Empfangsindexes; Senden von Nachrichten, die noch nicht von der mindestens einen mobilen Einheit empfangen wurden; Empfangen eines aktualisierten Empfangsindex von der mit dem Backend-System verbundenen mobilen Einheit; Löschen der oben genannten gesendeten Nachrichten aus der Master-Datenbank, aufgrund des empfangenen aktualisierten Empfangsindexes; und Aktualisieren des Master-Indexes des Backend-Systems.

Ferner wird ein Verfahren zum Empfangen von Nachrichten von einem Backend-System an mindestens einer mobilen Einheit, insbesondere mindestens einem Peer, bei eingeschränkter Konnektivität zwischen der mobilen Einheit und dem Backend-System bereitgestellt, wobei die mobile Einheit eine lokale Datenbank aufweist zum Speichern von Nachrichten und vorzugsweise zum Zwischenspeichern von Nachrichten an mindestens eine weitere mobile Einheit. Die mobile Einheit erstellt einen lokalen Index entsprechend den lokal gespeicherten Nachrichten und vorzugsweise der zwischengespeicherten Nachrichten, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit. Das Backend-System erstellt einen Master-Index entsprechend den bereits gesendeten Nachrichten, wobei das Verfahren bei vorhandener Konnektivität zwischen der mindestens einen mobilen Einheit und dem Backend-System die folgenden Schritte ausführt: Empfangen des Master-Index des Backend-Systems; Löschen der Nachrichten in der lokalen Datenbank der mobilen Einheit aufgrund des Master-Indexes und Aktualisieren des Empfangsindexes der mobilen Einheit und vorzugsweise mindestens eines weiteren Empfangsindexes mindestens einer weiteren mobilen Einheit; Senden des lokalen Indexes der mobilen Einheit und des mindestens einem aktualisiertem Empfangsindexes; Empfangen von Nachrichten, die noch nicht von der verbundenen mobilen Einheit empfangen wurden und vorzugsweise Nachrichten für mindestens eine weitere mobile Einheit, die noch nicht von der mobilen Einheit empfangen wurde; Speichern der empfangenen Nachrichten; Aktualisieren des Empfangsindexes und des lokalen Indexes der mobilen Einheit; und Senden des aktualisierten Empfangsindexes und des lokalen Indexes der mobilen Einheit an das Backend-System.

In einem weiteren Aspekt der vorliegenden Erfindung wird ein Verfahren zur Übermittlung von Nachrichten von einem Backend-System an mindestens eine mobile Einheit, insbesondere an mindestens ein Peer, bei eingeschränkter Konnektivität zwischen dem Backend-System und der mobilen Einheit bereitgestellt, wobei die mobile Einheit eine lokale Datenbank aufweist zum Speichern von Nachrichten und vorzugsweise zum Zwischenspeichern von Nachrichten an mindestens eine weitere mobile Einheit. Die mobile Einheit erstellt einen lokalen Index entsprechend den lokal gespeicherten Nachrichten und vorzugsweise der zwischengespeicherten Nachrichten, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit. Das Backend-System erstellt einen Master-Index entsprechend den bereits gesendeten Nachrichten, wobei das Verfahren bei vorhandener Konnektivität zwischen der mindestens einen mobilen Einheit und dem Backend-System sowohl die oben beschriebenen Schritte zum Senden als auch zum Empfangen von Nachrichten ausführt.

Gemäß einem weiteren Aspekts stellt die vorliegende Erfindung ein Verfahren zum Austausch von Nachrichten zwischen einem Backend-System und mindestens zwei mobile Einheiten, insbesondere mindestens zwei Peers, bei eingeschränkter Konnektivität zwischen den mobilen Einheiten und dem Backend-System bereit, wobei die mobile Einheit eine lokale Datenbank aufweist zum Speichern von Nachrichten und vorzugsweise zum Zwischenspeichern von Nachrichten an mindestens eine weitere mobile Einheit. Die mobile Einheit erstellt einen lokalen Index entsprechend den lokal gespeicherten Nachrichten und vorzugsweise der zwischengespeicherten Nachrichten, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert. Die mobilen Einheiten besitzen jeweils einen Master-Index des Backend-Systems entsprechend den bereits empfangenen Nachrichten zum Zeitpunkt des letzten Nachrichtenaustauschs zwischen der jeweiligen mobilen Einheit und dem Backend-System, wobei das Verfahren bei nicht vorhandener Konnektivität zwischen der mindestens einen mobilen Einheit und dem Backend-System die folgenden Schritte ausführt: Herstellen eines ad-hoc Netzwerks zwischen den mindestens zwei mobilen Einheiten; Austauschen der lokalen Indexe, der Master-Indexe und der Empfangsindexe; Löschen des älteren Empfangsindexes und des älteren Master-Indexes und Speichern des aktuelleren Empfangsindexes und des aktuelleren Master-Indexes; Aktualisieren der lokal gespeicherten Nachrichten aufgrund des aktuellen Master-Indexes und des aktuellen Empfangsindexes; und Senden von zusätzlichen in den lokalen Datenbanken der mobilen Einheiten befindlichen Nachrichten an die jeweils andere mobile Einheit.

In einem weiteren Aspekt wird ein Verfahren zur Übermittlung von Nachrichten von einem Backend-System an mindestens zwei mobile Einheiten, insbesondere an mindestens zwei Peers, bei eingeschränkter Konnektivität zwischen dem Backend-System und den mobilen Einheiten bereitgestellt, wobei das Backend-System eine Master-Datenbank aufweist zum Speichern von Nachrichten an mindestens eine mobile Einheit. Das Backend-System erstellt einen Master-Index entsprechend den bereits gesendeten Nachrichten, wobei die mobile Einheit eine lokale Datenbank aufweist zum Speichern von Nachrichten und vorzugsweise zum Zwischenspeichern von Nachrichten an mindestens eine weitere mobile Einheit. Die mobile Einheit erstellt einen lokalen Index entsprechend den lokal gespeicherten Nachrichten und vorzugsweise den zwischengespeicherten Nachrichten, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert. Die mobilen Einheiten besitzen jeweils einen Master-Index des Backend-Systems entsprechend den bereits empfangenen Nachrichten zum Zeitpunkt des letzten Nachrichtenaustauschs zwischen der jeweiligen mobilen Einheit und dem Backend-System, wobei das Verfahren bei vorhandener Konnektivität zwischen mindestens einer mobilen Einheit und dem Backend-System sowohl die oben genannten Schritte zum Empfangen als auch die oben genannten Schritte zum Senden ausführt und wobei das Verfahren bei nicht vorhandener Konnektivität zwischen mindestens einer mobilen Einheit und dem Backend-System die oben genannten Schritte zum Austausch von Nachrichten ausführt.

In einem weiteren Aspekt wird eine Vorrichtung zur Übermittlung von Daten oder Nachrichten zwischen mindestens zwei mobilen Einheiten, insbesondere mindestens zwei Peers, und/oder einem Backend-System bei eingeschränkter Konnektivität zwischen dem Backend-System und den mobilen Einheiten bereitgestellt, insbesondere nach einem der oben genannten Verfahren, wobei die mobilen Einheiten folgende Komponenten umfassen: eine lokale Datenbank; eine Sende- und Empfangseinheit; eine Datenaustauschmanagement-Einheit; und eine Quittungsfile-Einheit.

Die Quittungsfile-Einheit ist vorzugsweise geeignet sowohl Informationen über die in der lokalen Datenbank der mobilen Einheit gespeicherten Daten in Form eines lokalen Indexes, als auch Informationen über die in einer Datenbank des Backend-Systems gespeicherten Daten in Form eines Master-Indexes zu speichern.

Die lokale Datenbank der mobilen Einheiten ist vorzugsweise zum Speichern von eigenen Daten und vorzugsweise zum Zwischenspeichern von Daten mindestens einer weiteren mobilen Einheit an das Backend-System geeignet.

Ferner ist die Datenaustauschmanagement-Einheit der mobilen Einheiten geeignet, den lokalen Index entsprechend den gespeicherten eigenen Daten und vorzugsweise den zwischengespeicherten Daten zu erstellen.

Die Datenaustauschmanagement-Einheit ist vorzugsweise geeignet, sowohl den lokalen Index als auch den Master-Index auszulesen.

Gemäß einem weiteren Aspekt der vorliegenden Erfindung ist die Datenaustauschmanagement-Einheit geeignet, Daten aus der lokalen Datenbank der mobilen Einheiten aufgrund des Inhaltes des Master-Indexes zu löschen.

Die Quittungsfile-Einheit ist ferner geeignet Informationen über die in der lokalen Datenbank der mobilen Einheit gespeicherten Nachrichten für andere mobile Einheiten in Form eines lokalen Indexes, Informationen über bereits empfangene Nachrichten der mobilen Einheit und vorzugsweise Informationen über bereits empfangene Nachrichten von mindestens einer weiteren mobilen Einheit in Form von Empfangsindexe und Informationen über die in einer Datenbank des Backend-Systems vorhandenen Nachrichten in Form eines Master-Indexes zu speichern.

Die Datenaustauschmanagement-Einheit ist ferner geeignet den Empfangsindex für die jeweilige mobile Einheit zu erstellen.

Die Datenaustauschmanagement-Einheit ist vorzugsweise geeignet den lokalen Index für die jeweilige mobile Einheit zu erstellen.

Die Datenaustauschmanagement-Einheit ist ferner geeignet den lokalen Index, die Empfangsindexe und den Master-Index auszulesen.

Gemäß einem weiteren Aspekt der vorliegenden Erfindung wird eine Vorrichtung zur Übermittlung von Daten oder Nachrichten zwischen mindestens zwei mobilen Einheiten, insbesondere mindestens zwei Peers, und einem Backend-System bei eingeschränkter Konnektivität zwischen dem Backend-System und den mobilen Einheiten bereitgestellt, insbesondere nach einem der oben beschriebenen Verfahren, wobei das Backend-System folgende Komponenten umfasst: eine Master-Datenbank; eine Sende- und Empfangseinheit; eine Datenaustauschmanagement-Einheit; und eine Quittungsfile-Einheit.

Die Quittungsfile-Einheit ist vorzugsweise geeignet Informationen über die in der Master-Datenbank des Backend-Systems gespeicherten Daten in Form eines Master-Indexes zu speichern.

Die Master-Datenbank des Backend-Systems ist vorzugsweise geeignet zum Speichern von empfangenen Daten von mindestens einer mobilen Einheit an das Backend-System.

Die Datenaustauschmanagement-Einheit des Backend-Systems kann ferner geeignet sein den Master-Index entsprechend den gespeicherten Daten zu erstellen.

Die Quittungsfile-Einheit ist vorzugsweise geeignet Informationen über die in der Master-Datenbank des Backend-Systems vorhandenen Nachrichten in Form eines Master-Indexes zu erstellen.

Die Datenaustauschmanagement-Einheit kann ferner geeignet sein mindestens einen Empfangsindex von einer mobilen Einheit zu empfangen und auszulesen.

Die Datenaustauschmanagement-Einheit kann ferner geeignet sein Nachrichten aus der Master-Datenbank zu löschen aufgrund der Empfangsindexe der mobilen Einheiten.

Mit anderen Worten wird ein Verfahren und eine Vorrichtung zum Daten-Management im ad hoc Netzwerk zwischen den Peers und die Mitnahme der Daten durch im Produktionsprozess beteiligte Maschinen bereitgestellt. Gemäß der vorliegenden Erfindung wird mittels eines selbstorganisierenden "Datenaustauschmanagement Verfahren, das weiß welche Daten im Backend des Steuerungsservices in der Cloud und im lokalen Speicher des Peers/Maschine (Source) gerade vorhanden sind bereitgestellt.

Somit kann der mobile Produktionsprozess trotz fehlender Konnektivität zwischen mobilen/entfernten stationären Produktionsanlagen zu der Datenanalyse/Verarbeitung in der Cloud sichergestellt/aufrechterhalten werden.

Gegenüber den bekannten Verfahren zum Datenaustausch in mobilen Produktionsprozessen bietet das Verfahren bzw. die Vorrichtung die Vorteile der Bidirektionalen Übermittlung von Daten und die Verringerung der zu übertragenden Datenmengen, d.h. Reduzierung des Datenverkehrs in mobilen Produktionsprozessen.

Weitere Vorteile der vorliegenden Erfindung liegen in der Übertragungssicherheit z.B. durch das Löschen bereits gesendeter/übergebener Daten. Ferner ist eine Verlängerung der Reichweite Cloud-gesteuerter Produktions- und Logistikprozesse mit der vorliegenden Erfindung möglich. Eine vorteilhafte Verwendung liegt ferner in der Flottensteuerung oder für Transportunternehmen (Busse, Bahnen) sowie in der Prozessteuerung für Einsatzkräfte in Katastrophengebieten und bei Ausfall öffentlicher mobiler Netze.

Weitere Vorteile gegenüber dem Stand der Technik liegen in der Erweiterung der Prozessreichweite, der indirekten Netzabdeckung und der Protokollerweiterung zum Datenmanagement mittels Quittungsprotokollen. Die vorliegende Erfindung kann ferner zur Verwendung/Erweiterung bekannter IT Verfahren zur virtuellen Netzabdeckung und zur Sicherstellung und Optimierung des Datenaustausches in mobiler M2M Kommunikation bei eingeschränkter Konnektivität verwendet werden.

Eine weitere vorteilhafte Wirkung der vorliegenden Erfindung ist die einfache Bedienbarkeit, die Verwendung bestehender Protokolle und die Verwendung bestehender Endgeräte.

Die Verwendung der vorliegenden Erfindung ermöglicht die Realisierung von mobilen Prozesssteuerungslösungen die bisher wegen fehlender Backend Konnektivität nicht möglich waren. Mit anderen Worten, ermöglicht die Erfindung den Transfer von Konnektivität basierenden Produkten auf Anwendungen wo nur beschränkt Konnektivität vorhanden ist.

Die vorliegende Erfindung kann z.B. bei Systemhäusern (auch Betreiber übergreifend), Betreiber und Nutzer von mobilen Produktionsprozessen, mobiler Anlagen oder Anlage außerhalb von Netzabdeckung, Betreiber mobiler oder entfernter Prozesse, Flotten Logistik oder auch speziellen Einsatzkräften Anwendung finden. Desweiteren kann die vorliegende Erfindung z.B. im sogenannten Internet of Things oder zur virtuellen Netzabdeckung für Non-Real Time Kommunikation eingesetzt werden. Ferner kann zur Anbindung an das Backend-System eine Basisstation mit z.B. Satelliten Uplink oder der WLAN Anschluss auf dem Bauernhof verwendet werden. Weitere Anwendungen und Modifikationen, die im Bereich des Schutzumfangs der vorliegenden Erfindung liegen, sind möglich und für den Fachmann aus der Beschreibung und den Ansprüchen ersichtlich.

### Kurze Beschreibung der Zeichnungen

Fig. 1 zeigt schematisch den prinzipiellen Grundaufbau der erfindungsgemäßen Lösung und die am Prozess beteiligten Peers als mobiler Datentransporter;
Fig. 2 zeigt einen Ablaufplan bei vorhandener Konnektivität für ein Ausführungsbeispiel 1;
Fig. 3 zeigt einen Ablaufplan bei nicht vorhandener Konnektivität für ein Ausführungsbeispiel 1;
Fig. 4 zeigt schematisch den prinzipiellen Grundaufbau der erfindungsgemäßen Lösung für ein Ausführungsbeispiel 1;
Fig. 5 zeigt schematisch das Zusammenwirken einzelner Komponenten gemäß Fig. 4;
Fig. 6 zeigt einen Ablaufplan bei vorhandener Konnektivität für ein Ausführungsbeispiel 2;
Fig. 7 zeigt einen Ablaufplan bei nicht vorhandener Konnektivität für ein Ausführungsbeispiel 2;
Fig. 8 zeigt schematisch den prinzipiellen Grundaufbau der erfindungsgemäßen Lösung für ein Ausführungsbeispiel 2;
Fig. 9 zeigt schematisch das Zusammenwirken einzelner Komponenten gemäß Fig. 8.

### Ausführungsbeispiele der Erfindung

Nachfolgend wird die vorliegende Erfindung anhand von Ausführungsbeispielen und der Figuren näher erläutert.

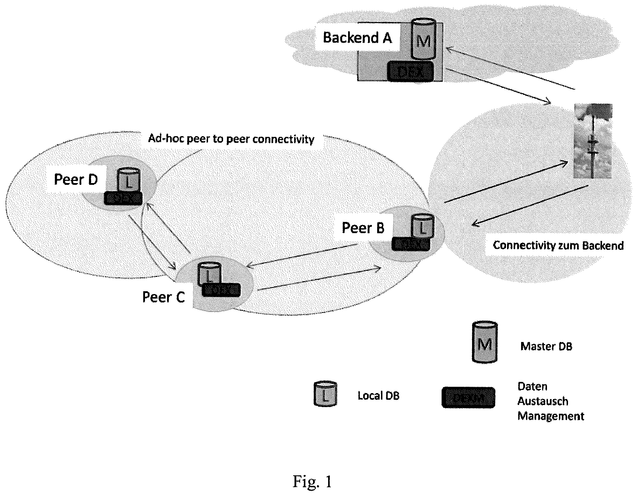

Die der Erfindung zu Grunde liegende Anordnung ist schematisch in Fig. 1 dargestellt. Das Prinzip beruht unter anderem darauf, dass jede Datenquelle (Peer) alle ihre Daten an den im P2P Netz erreichbaren Nachbarn weiter gibt. Jeder Peer speichert somit auch die Daten der anderen Datenquellen/Nachbarn zwischen. Die Peers senden sich untereinander Quittungen über bereits empfangene oder bereits an das Backend (im Weiteren auch als Backend-System bezeichnet) gesendete Daten. Quittierte Daten brauchen nicht noch einmal gesendet werden. Bekommt ein Peer Konnektivität zum Backend-System sendet er seine und die bei ihm zwischengespeicherten Daten der anderen Peers an das Backend-System. Um den Datentransfer zu minimieren werden Daten die bereits in die Master Datenbank (MDB) des Backend-Systems geladen wurden auf den Datenbanken der Peers (im Weiteren auch lokale Datenbank (LDB) genannt) gelöscht. Dies wird durch ein sogenanntes "Quittungsprotokoll" realisiert.

Bezug nehmend auf Fig. 1 haben die Peers B, C und D keine Backend Konnektivität und tauschen ihre Daten über ein/mehrere ad-hoc Netzwerk (NW) und "Datenaustauschmanagement Verfahren" aus. B agiert somit als mobiler Datenzwischenspeicher, wobei der Datenaustausch zwischen C und B über ad-hoc NW stattfindet. In einem nächsten Schritt verändert B seinen Standort z.B. beim Transport von Gütern. Erreicht B auf seinem Transportweg Konnektivität zum Backend-System z.B. durch öffentliche mobile Netzabdeckung, dann erfolgt der Datenaustausch zwischen B und dem Backend (A) z.B. über öffentliche NW. Sollte B auf seinem Transportweg wieder C und D erreichen, dann erfolgt ein Abgleich des Standes der gelieferten Daten und ggf. ein erneuter Datenaustausch zwischen den Peers.

### Ausführungsbeispiel 1: Verfahren für die Übermittlung von Daten von den Peers zum Backend-System

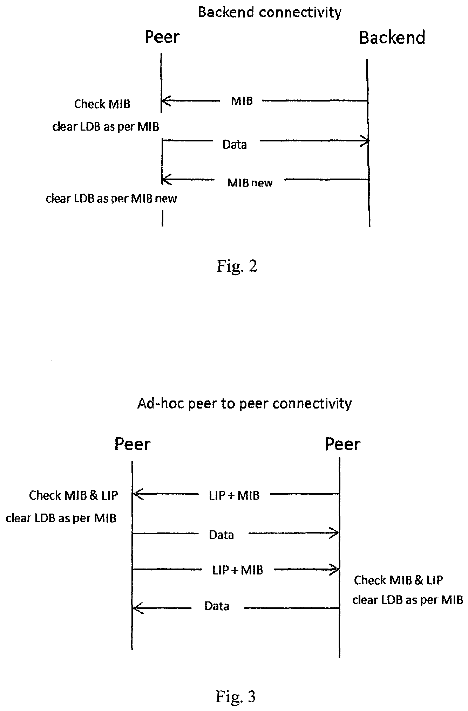

Nachstehend wird das Verfahren gemäß eines ersten Ausführungsbeispiels anhand von Fig. 2 und Fig. 3 erläutert. Gemäß der vorliegenden Erfindung erfolgt bei nicht vorhandener Konnektivität zum Backend-System der Datenaustausch zwischen den mobilen Einheiten (Peers) über mobile ad-hoc Netzwerke z.B. WLAN oder in nichtlizensierten Industry Scientific Medical ISM Bändern.

Bei Verfügbarkeit von Konnektivität zwischen Backend-System und einer mobilen Einheit erfolgt die Übergabe des Master Indexes (MIB) der Master Datenbank (MDB) des Backend-Systems an den Peer. An Hand des MIB ermittelt der Peer welche der gesammelten Daten an die MDB des Backend-Systems gesendet werden müssen.

Im Backend-System wird durch einen Datenaustausch Management Service des Backend-Systems (DEXMB) ein MIB entsprechend den von den Peers empfangenen Daten in der MDB erstellt und abschließend an den Peer übergeben. Die abschließende Übergabe des neuen MIB ist für den Peer gleichzeitig das Zeichen das die Datenübertragung erfolgreich war.

Im Datenaustausch Management Service des Peers (DEXMP) eines Peers wird ein lokaler Index des Peer (LIP) entsprechend den lokal gesicherten Daten (eigene und von anderen Peers übernommene /Zwischengespeicherte) erstellt.

MIB und LIP werden im Quittungsfile des Peer gespeichert, übertragen und durch das DEXMP und DEXMB aktualisiert.

Nachstehend wird anhand von Fig. 2 das Prinzip der vorliegenden Erfindung bei bestehender Verbindung (Konnektivität) zwischen Peer und Backend-System beispielhaft beschrieben.

Besteht Konnektivität zwischen einer Peer und dem Backend-System wird der MIB am Beginn einer Daten Kommunikation vom Backend zum Peer übermittelt.

Das DEXMP des Peer löscht in seiner Lokalen Datenbank (LDB), basierend auf dem MIB, alle bereits im Backend-System befindlichen Datensätze und sendet danach nur noch die noch nicht in der MDB existierenden Datensätze an das Backend-System.

Das Backend-System sendet nach Übertragung ein neues/aktuelles MIB an den Peer. Basierend auf dem aktuellen MIB wird das Quittungsfile und die LDB aktualisiert und in der LDB werden entsprechend dem aktuellen MIB die erfolgreich übertragenen Datensätze gelöscht, auch der LIP wird dementsprechend aktualisiert.

Als Resultat sind in den LDB des Peers keine Datensätze mehr vorhanden, die schon an das Backend-System geliefert wurden. Im Quittungsfile befindet sich der aktuelle MIB.

Das Prinzip der vorliegenden Erfindung bei nicht vorhandener Konnektivität zwischen den Peers und dem Backend-System wir nachstehend anhand von Fig. 3 beispielhaft beschrieben.

Bei nicht vorhandener Konnektivität wird in einem ersten Schritt ein ad-hoc Netzwerk zwischen mindestens zwei Peers hergestellt. Die beiden Indexe MIB und LIB werden im Quittungsprotokoll zwischen den Peers am Beginn der Datenübertragung ausgetauscht.

Empfängt ein Peer einen MIB wird immer der aktuellere (höhere) behalten. Über den MIB wird ermittelt welche Daten bereits an das Backend-System geliefert wurden, demensprechend können lokal diese Daten gelöscht und die lokalen Indexe LIPs aktualisiert werden.

Anhand der lokalen Indexe LIPs wird ermittelt welche Daten die Peers austauschen müssen. Daraufhin erfolgt der Austausch der Daten zwischen den Peers. Als Resultat sind die Datensätze der beiden Peers angeglichen.

### Ausführungsbeispiel 1: Vorrichtung für die Übermittlung von Daten von den Peers zum Backend-System

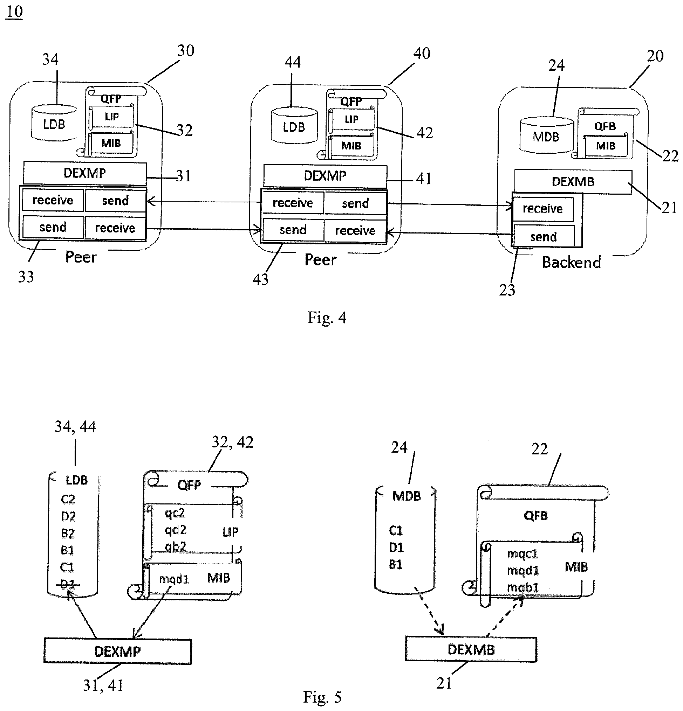

Nachstehend wir die Vorrichtung 10 der vorliegenden Erfindung gemäß einer Ausführungsform der vorliegenden Erfindung beispielhaft anhand von Fig. 4 und Fig. 5 beschrieben. Die Architektur (Vorrichtung) besteht dabei aus zwei Hauptelementen. Zum einen das Backend-System 20 und zum anderen mindestens zwei Peers 30, 40.

Die erfindungsgemäße Vorrichtung beruht im Wesentlichen auf dem Daten Austausch Service Management des Backend-Systems (DEXMB) 21 und dem Daten Austausch Service Management des Peer (DEXMP) 31, 41, dem Quittungsfile des Backend-Systems (QFB) 22 und dem Quittungsfile des Peer (QFP) 32, 42. Des Weiteren besteht die Vorrichtung aus Sende- und Empfangsmodule 23, 33, 43, der Master Datenbank des Backend-Systems (MIB) 24 und der lokalen Datenbank des Peer 34, 44.

Gemäß Fig. 4 und Fig. 5 befindet sich im Peer die LDB 34, 44 das DEXMP 31, 41 Sende-und Empfangsmodul 33, 43 und QFP 32, 42.

Das DEXMP 31, 41 erstellt den lokalen Index LIP, löscht Daten entsprechend MIB in der LDB 34, 44, sendet Daten an andere Peers entsprechend dem LIP des anderen Peer und übergibt Daten an das Backend-System 20.

Das QFP 32, 42 enthält den LIP und eine Kopie des MIB. Der LIP ist die Liste der aktuellen in der LDB 34, 44 gespeicherten Datensätze des Peers und von anderen Peers übernommenen/gespeicherten Datensätze.

Bezug nehmend auf Fig. 4 und Fig. 5 befindet sich im Backend-System 20 die MDB 24, der DEXMB 21, das Sende- und Empfangsmodul 23 und das QFB 22.

Das DEXMB 21 erstellt den MIB und übergibt den aktuellen MIB im Quittungsfile QFB 22 an die Peers und empfängt Daten von den Peers.

Der MIB ist die Liste der Indexe der vom Backend-System 20 empfangenen Datensätze der Peers 30, 40. Das QFB 22 enthält den MIB.

### Ausführungsbeispiel 2: Verfahren für die Übermittlung von Nachrichten des Backend-Systems zu den Peers

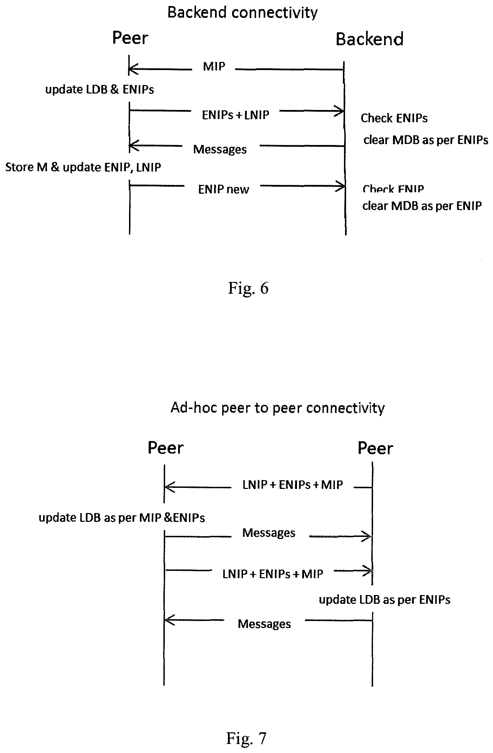

Nachstehend wird das Verfahren gemäß eines zweiten Ausführungsbeispiels anhand von Fig. 6 und Fig. 7 erläutert. Gemäß der vorliegenden Erfindung erfolgt bei nicht vorhandener Konnektivität zum Backend-System die Nachrichtenübertragung vom Backend-System an die Peers über andere Peers. Zwischen den mobilen Einheiten (Peers) erfolgt dabei die Übertragung über mobile ad-hoc Netzwerke z.B. WLAN oder in nichtlizensierten ISM Bändern.

In den Peers wird durch den DEXMP ein Empfänger Nachrichten Index des Peers (ENIP) entsprechend der schon empfangenen Nachrichten des Backend-Systems an den Peer erstellt.

Im lokalen DEXMP eines Peers wird zusätzlich ein lokaler Nachrichten Index (LNIP) entsprechend den lokal gesicherten Nachrichten des Backend-Systems für andere Peers erstellt.

Bei Verfügbarkeit von Konnektivität zwischen Backend und einer mobilen Einheit übergibt das Backend seinen Master Index (MIP) der bereits von den Peers quittierten Nachrichten an den Peer, die mobile Einheit (Peer) übergibt die ENIPs und seinen LNIP an das Backend-System.

Basierend auf den ENIPs erfolgt durch das Backend-System die Löschung bereits von den Empfänger Peers empfangener Nachrichten in der MDB und die Übergabe der noch nicht von den Peers erhaltenen Nachrichten.

Der ENIP und der LNIP werden im QFP gespeichert, übertragen und durch das DEXMP aktualisiert.

Nachstehend wird anhand von Fig. 6 das Prinzip der vorliegenden Erfindung bei bestehender Verbindung (Konnektivität) zwischen Peer und Backend-System beispielhaft beschrieben.

Besteht Konnektivität zwischen einem Peer und dem Backend-System wird der MIP der Empfangsquittungen an den Peer übertragen, der Peer aktualisiert daraufhin seine LDB und die Quittungen ENIPs. Dann werden die aktualisierten ENIPs und der LNIP im Quittungsfile QFP vom Peer zum Backend-System übermittelt.

Das DEXMB des Backend-Systems löscht in seiner MDB, basierend auf den ENIPs, alle bereits von den Peers an sie adressierten und empfangenen Nachrichten und sendet danach nur noch die Nachrichten, die noch nicht von den Empfänger Peers quittierten wurden und neue Nachrichten an andere Peers die noch nicht von dieser momentan verbundenen Peer empfangen wurden.

Der DEXMP des Peers aktualisiert danach seinen LNIP und aktualisiert sein ENIP entsprechend seiner Nachrichten vom Backend-System und sendet seinen aktuellen ENIP an das Backend-System. Das Backend-System löscht seine Nachrichten an diesen Peer in der MDB und aktualisiert seinen MIP. Als Resultat sind in der MDB des Backend-Systems und in der LDB keine Nachrichten mehr vorhanden die schon von den Peers empfangen wurden.

Das Prinzip der vorliegenden Erfindung bei nicht vorhandener Konnektivität zwischen den Peers und dem Backend-System wir nachstehend anhand von Fig. 7 beispielhaft beschrieben.

Bei nicht vorhandener Konnektivität wird zunächst ein ad-hoc Netzwerk zwischen mindestens zwei Peers hergestellt.

Daraufhin werden der MIP, die ENIPs der Peers und der jeweilige LNIP im Quittungsprotokoll QFP zwischen den Peers am Beginn einer Nachrichtenübertragung ausgetauscht.

Empfängt ein Peer die Empfänger Nachrichten Indexe ENIPs und MIP wird immer der aktuellere (höhere) behalten. Über die ENIPs und MIP wird ermittelt welche Nachrichten bereits vom Backend-System an das jeweilige Peer geliefert wurden, demensprechend können lokal diese Nachrichten gelöscht und die LNIP aktualisiert werden.

Anhand der LNIPs wird ermittelt welche zwischengespeicherten Nachrichten die Peers austauschen müssen. Dann erfolgt der Austausch der Daten zwischen den Peers. Danach werden die ENIPs der beiden Peers aktualisiert und noch einmal ausgetauscht und die LDB aktualisiert.

Als Resultat sind in den LDBs der Peers keine Nachrichten mehr vorhanden die schon von den Empfänger Peers empfangen wurden. Jeder Peer verfügt über dieselben Nachrichten an andere Empfänger Peers für die noch keine ENIPs vorliegen.

### Ausführungsbeispiel 2: Vorrichtung für die Übermittlung von Nachrichten des Backend-Systems zu den Peers

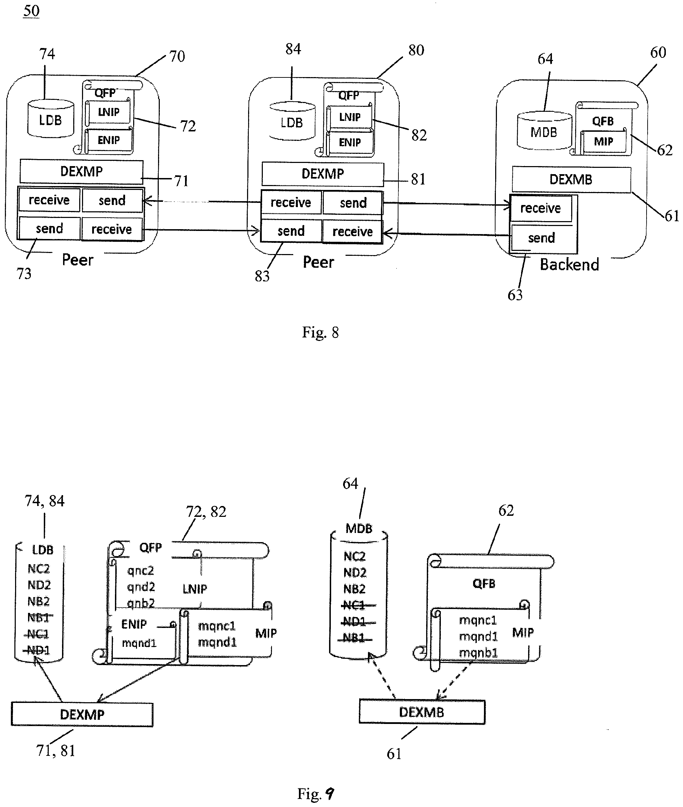

Nachstehend wir die Vorrichtung 50 der vorliegenden Erfindung gemäß einer weiteren Ausführungsform der vorliegenden Erfindung beispielhaft anhand von Fig. 8 und Fig. 9 beschrieben. Die Architektur (Vorrichtung) 50 besteht dabei aus zwei Hauptelementen. Zum einen das Backend-System 60 und zum anderen mindestens zwei Peers 70, 80.

Die Vorrichtung besteht wie im ersten Ausführungsbeispiel aus zwei Hauptelementen, das Backend-System 60 und den Peers 70, 80.

Ferner umfasst die erfindungsgemäße Vorrichtung gemäß Fig. 8 und Fig. 9 die wesentlichen Komponenten, das Daten Austausch Service Management des Backend-Systems (DEXMB) 61, das Daten Austausch Service Management der Peers (DEXMP) 71, 81, dem Quittungsfile des Backend-Systems QFB 62, dem Quittungsfile der Peers QFP 72, 82, Sende- und Empfangsmodule 63, 73, 83, der Master Datenbank des Backend-Systems (MDB) 64 und der lokalen Datenbank der Peers (LDB) 74, 84.

Gemäß Fig. 8 und Fig. 9 befindet sich in den Peers 70, 80 die LDB 74, 84, das DEXMP 71, 81, Sende- und Empfangsmodul 73,83 und das QFP 72, 82.

Das DEXMP 71, 81 erstellt den Empfänger Nachrichten Index ENIP der Peers 70, 80 entsprechend der empfangenen Nachrichten des Backend-Systems 60 an diese Peers, löscht Nachrichten entsprechend dem MIP anderer ENIPs, sendet Nachrichten an andere Peers entsprechend dem LNIP der anderen Peers und empfängt Nachrichten vom Backend-System 60 für die eigene und andere Ziel Peers.

Das QFP 72, 82 enthält den Lokalen Index LNIP, den eigenen ENIP und die ENIPs der anderen Peers und eine Kopie des MIP. Der LNIP ist die Liste der aktuellen in der LDB 74, 84 gespeicherten Nachrichten des Backend-Systems 60 an andere Ziel Peers 70, 80.

Der ENIP ist der Index der von dem Peer empfangenen Nachrichten. Der MIP ist der Masterindex der von den Peers quittierten und empfangenen Nachrichten.

Ferner befindet sich im Backend-System 60 die MDB 64 mit den für die Peers 70, 80 bestimmten Nachrichten, der DEXMB 61, das Sende- und Empfangsmodul 63 und das QFB 62.

Das DEXMB 61 nimmt die ENIPs der einzelnen Peers 70, 80 im QFB 62 entgegen, erstellt daraus den MIP und löscht Nachrichten in der MDB 64 basierend auf dem MIP und übergibt Nachrichten an die Peers 70, 80. Der MIP ist die Liste der ENIPs. Das Backend Quittungsfile QFB 62 enthält den MIP.

Während die vorliegende Erfindung hier unter Bezug auf ihre bevorzugten Ausführungsformen beschrieben und dargestellt wurde, ist für Fachleute auf dem Gebiet offensichtlich, dass verschiedene Modifikationen und Änderungen daran vorgenommen werden können, ohne den Schutzbereich der Erfindung zu verlassen. Auf diese Weise ist beabsichtigt, dass die vorliegende Erfindung die Modifikationen und Änderungen dieser Erfindung abdeckt, sofern sie in den Schutzbereich der beigefügten Patentansprüche und ihrer Äquivalente fallen.

## Patentansprüche

1. Verfahren zum Senden von Daten von mindestens einer mobilen Einheit, insbesondere von mindestens einem Peer, an ein Backend-System bei eingeschränkter Konnektivität zwischen der mobilen Einheit und dem Backend-System, wobei die mobile Einheit eine lokale Datenbank aufweist zum Speichern von eigenen Daten und vorzugsweise zum Zwischenspeichern von Daten mindestens einer weiteren mobilen Einheit, wobei die mobile Einheit einen lokalen Index entsprechend den gespeicherten eigenen Daten und vorzugsweise den zwischengespeicherten Daten erstellt, wobei das Backend-System eine Master-Datenbank aufweist zum Speichern von empfangenen Daten von mindestens einer mobilen Einheit, wobei das Backend-System einen Master-Index entsprechend den gespeicherten Daten erstellt, wobei das Verfahren bei vorhandener Konnektivität zwischen der mindestens einen mobilen Einheit und dem Backend-System die folgenden Schritte ausführt:
a1) Empfangen des Master-Index von dem Backend-System,
b1) Löschen der Daten der lokalen Datenbank, die in der Master-Datenbank enthalten sind anhand eines Vergleiches des lokalen Index mit dem Master-Index und Aktualisieren des lokalen Index,
c1) Senden von in der lokalen Datenbank gespeicherten Daten, die in der Master-Datenbank noch nicht enthalten sind,
d1) Empfangen und Speichern eines neuen Master-Indexes von dem Backend-System, und
e1) Löschen der im Schritt c1) gesendeten Daten der lokalen Datenbank anhand eines Vergleiches des aktualisierten lokalen Index mit dem neuen Master-Index und erneutes Aktualisieren des lokalen Index.

2. Verfahren zum Empfangen von Daten von mindestens einer mobilen Einheit, insbesondere von mindestens einem Peer, an einem Backend-System bei eingeschränkter Konnektivität zwischen der mobilen Einheit und dem Backend-System, wobei das Backend-System eine Master-Datenbank aufweist zum Speichern von empfangenen Daten von mindestens einer mobilen Einheit, wobei das Backend-System einen Master-Index entsprechend den gespeicherten Daten erstellt, wobei das Verfahren bei vorhandener Konnektivität zwischen der mindestens einen mobilen Einheit und dem Backend-System die folgenden Schritte ausführt:
a2) Senden des Master-Index an die mobile Einheit,
b2) Empfangen von neuen Daten von der mobilen Einheit, die sich nicht in der Master-Datenbank befinden,
c2) Speichern der neuen Daten in der Master-Datenbank,
d2) Aktualisieren des Master-Indexes über die in der Master-Datenbank gespeicherten Daten, und
e2) Senden des neuen Master-Indexes an die mobile Einheit.

3. Verfahren zur Übermittlung von Daten von mindestens einer mobilen Einheit, insbesondere von mindestens einem Peer, an ein Backend-System bei eingeschränkter Konnektivität zwischen der mobilen Einheit und dem Backend-System, wobei die mobile Einheit eine lokale Datenbank aufweist zum Speichern von eigenen Daten und vorzugsweise zum Zwischenspeichern von Daten mindestens einer weiteren mobilen Einheit, wobei die mobile Einheit einen lokalen Index entsprechend den gespeicherten eigenen Daten und vorzugsweise den zwischengespeicherten Daten erstellt, wobei das Backend-System eine Master-Datenbank aufweist zum Speichern von empfangenen Daten von mindestens einer mobilen Einheit, wobei das Backend-System einen Master-Index entsprechend den gespeicherten Daten erstellt, wobei das Verfahren bei vorhandener Konnektivität zwischen der mindestens einen mobilen Einheit und dem Backend-System sowohl die Schritte von Anspruch 1 als auch die Schritte von Anspruch 2 ausführt.

4. Verfahren zum Austausch von für ein Backend-System bestimmten Daten zwischen mindestens zwei mobilen Einheiten, insbesondere zwischen mindestens zwei Peers, bei eingeschränkter Konnektivität zwischen den mobilen Einheiten und dem Backend-System, wobei die mobilen Einheiten jeweils eine lokale Datenbank aufweisen zum Speichern von eigenen Daten und vorzugsweise zum Zwischenspeichern von Daten mindestens einer weiteren mobilen Einheit, wobei die mobilen Einheiten jeweils einen lokalen Index entsprechend den gespeicherten eigenen Daten und vorzugsweise den zwischengespeicherten Daten erstellen, wobei die mobilen Einheiten jeweils einen Master-Index entsprechend den gespeicherten Daten des Backend-Systems zum Zeitpunkt des letzten Datenaustauschs zwischen der jeweiligen mobilen Einheit und dem Backend-System besitzen, wobei das Verfahren bei nicht vorhandener Konnektivität zwischen den mindestens zwei mobilen Einheiten und dem Backend-System die folgenden Schritte ausführt:
a3) Herstellen eines ad-hoc Netzwerks zwischen den mindestens zwei mobilen Einheiten,
b3) Austauschen der Master-Indexe und der lokalen Indexe,
c3) Löschen des älteren der jeweiligen Master-Indexe und Speichern des aktuelleren Master-Indexes,
d3) Löschen der Daten aus den lokalen Datenbanken der mobilen Einheiten, welche bereits an das Backend gesendet wurden, anhand eines Vergleiches des aktuellen Master-Indexes mit den lokalen Indexen, und Aktualisieren der jeweiligen lokalen Indexe,
e3) Aktualisieren der lokalen Indexe über die in der lokalen Datenbank der jeweiligen mobilen Einheit gespeicherten Daten, und
f3) Senden von zusätzlichen in den lokalen Datenbanken der mobilen Einheiten befindlichen Daten an die jeweils andere mobile Einheit, sodass die lokalen Datenbanken identische Daten enthalten, welche noch nicht an das Backend gesendet wurden und erneutes Aktualisieren der jeweiligen lokalen Indexe.

5. Verfahren zur Übermittlung von Daten von mindestens zwei mobilen Einheiten, insbesondere mindestens zwei Peers, an ein Backend-System bei eingeschränkter Konnektivität zwischen den mobilen Einheiten und dem Backend-System, wobei das Backend-System einen Master-Index entsprechend den gespeicherten Daten erstellt, wobei die mobilen Einheiten jeweils eine lokale Datenbank aufweisen zum Speichern von eigenen Daten und vorzugsweise zum Zwischenspeichern von Daten mindestens einer weiteren mobilen Einheit, wobei die mobilen Einheiten jeweils einen lokalen Index entsprechend den gespeicherten eigenen Daten und vorzugsweise den zwischengespeicherten Daten erstellen, wobei die mobilen Einheiten jeweils einen Master-Index entsprechend den gespeicherten Daten des Backend-Systems zum Zeitpunkt des letzten Datenaustauschs zwischen der jeweiligen mobilen Einheit und dem Backend-System besitzen, wobei das Verfahren bei vorhandener Konnektivität zwischen mindestens einer mobilen Einheit und dem Backend-System sowohl die Schritte von Anspruch 1 als auch die Schritte von Anspruch 2 ausführt und wobei das Verfahren bei nicht vorhandener Konnektivität zwischen mindestens einer mobilen Einheit und dem Backend-System die Schritte von Anspruch 4 ausführt.

6. Verfahren nach einem der Ansprüche 1 bis 5, wobei der Master Index des Backend-Systems und der Lokale Index der mobilen Einheit in einer Quittungsdatei gespeichert wird.

7. Verfahren nach einem der Ansprüche 4 bis 6, wobei das ad-hoc Netzwerk zwischen den mobilen Einheiten über WLAN oder nichtlizensierte ISM Bänder (Industry, Scientific, Medical) hergestellt wird.

8. Verfahren zum Senden von Nachrichten von einem Backend-System an mindestens eine mobile Einheit, insbesondere mindestens einen Peer, bei eingeschränkter Konnektivität zwischen der mobilen Einheit und dem Backend-System, wobei die mobile Einheit eine lokale Datenbank aufweist zum Speichern von Nachrichten und vorzugsweise zum Zwischenspeichern von Nachrichten an mindestens eine weitere mobile Einheit, wobei die mobile Einheit einen lokalen Index entsprechend den lokal gespeicherten Nachrichten und vorzugsweise der zwischengespeicherten Nachrichten erstellt, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit, wobei das Backend-System einen Master-Index entsprechend den bereits gesendeten Nachrichten erstellt, wobei das Verfahren bei vorhandener Konnektivität zwischen der mindestens einen mobilen Einheit und dem Backend-System die folgenden Schritte ausführt:
a4) Senden des Master-Index an die mit dem Backend-System verbundene mobile Einheit,
b4) Empfangen von mindestens einem Empfangsindex und des lokalen Indexes,
c4) Löschen aller bereits empfangenen Nachrichten aus der Master-Datenbank des Backend-Systems, aufgrund des mindestens einen Empfangsindexes,
d4) Senden von Nachrichten, die noch nicht von der mindestens einen mobilen Einheit empfangen wurden,
e4) Empfangen eines aktualisierten Empfangsindex von der mit dem Backend-System verbundenen mobilen Einheit,
f4) Löschen der in Schritt d4) gesendeten Nachrichten aus der Master-Datenbank, aufgrund des empfangenen aktualisierten Empfangsindexes, und
g4) Aktualisieren des Master-Indexes des Backend-Systems.

9. Verfahren zum Empfangen von Nachrichten von einem Backend-System an mindestens einer mobilen Einheit, insbesondere mindestens einem Peer, bei eingeschränkter Konnektivität zwischen der mobilen Einheit und dem Backend-System, wobei die mobile Einheit eine lokale Datenbank aufweist zum Speichern von Nachrichten und vorzugsweise zum Zwischenspeichern von Nachrichten an mindestens eine weitere mobile Einheit, wobei die mobile Einheit einen lokalen Index entsprechend den lokal gespeicherten Nachrichten und vorzugsweise der zwischengespeicherten Nachrichten erstellt, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit, wobei das Backend-System einen Master-Index entsprechend den bereits gesendeten Nachrichten erstellt, wobei das Verfahren bei vorhandener Konnektivität zwischen der mindestens einen mobilen Einheit und dem Backend-System die folgenden Schritte ausführt:
a5) Empfangen des Master-Index des Backend-Systems,
b5) Löschen der Nachrichten in der lokalen Datenbank der mobilen Einheit aufgrund des Master-Indexes und Aktualisieren des Empfangsindexes der mobilen Einheit und vorzugsweise mindestens eines weiteren Empfangsindexes mindestens einer weiteren mobilen Einheit,
c5) Senden des lokalen Indexes der mobilen Einheit und des mindestens einem aktualisiertem Empfangsindexes ,
d5) Empfangen von Nachrichten, die noch nicht von der verbundenen mobilen Einheit empfangen wurden und vorzugsweise Nachrichten für mindestens eine weitere mobile Einheit, die noch nicht von der mobilen Einheit empfangen wurde,
e5) Speichern der empfangenen Nachrichten,
f5) Aktualisieren des Empfangsindexes und des lokalen Indexes der mobilen Einheit, und
g5) Senden des aktualisierten Empfangsindexes und des lokalen Indexes der mobilen Einheit an das Backend-System.

10. Verfahren zur Übermittlung von Nachrichten von einem Backend-System an mindestens eine mobile Einheit, insbesondere an mindestens ein Peer, bei eingeschränkter Konnektivität zwischen dem Backend-System und der mobilen Einheit, wobei die mobile Einheit eine lokale Datenbank aufweist zum Speichern von Nachrichten und vorzugsweise zum Zwischenspeichern von Nachrichten an mindestens eine weitere mobile Einheit, wobei die mobile Einheit einen lokalen Index entsprechend den lokal gespeicherten Nachrichten und vorzugsweise der zwischengespeicherten Nachrichten erstellt, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei das Backend-System eine Master-Datenbank aufweist zum Speichern von Nachrichten an mindestens eine mobile Einheit, wobei das Backend-System einen Master-Index entsprechend den bereits gesendeten Nachrichten erstellt, wobei das Verfahren bei vorhandener Konnektivität zwischen der mindestens einem mobilen Einheit und dem Backend-System sowohl die Schritte von Anspruch 8 als auch die Schritte von Anspruch 9 ausführt.

11. Verfahren zum Austausch von Nachrichten zwischen einem Backend-System und mindestens zwei mobile Einheiten, insbesondere mindestens zwei Peers, bei eingeschränkter Konnektivität zwischen den mobilen Einheiten und dem Backend-System, wobei die mobile Einheit eine lokale Datenbank aufweist zum Speichern von Nachrichten und vorzugsweise zum Zwischenspeichern von Nachrichten an mindestens eine weitere mobile Einheit, wobei die mobile Einheit einen lokalen Index entsprechend den lokal gespeicherten Nachrichten und vorzugsweise der zwischengespeicherten Nachrichten erstellt, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei die mobilen Einheiten jeweils einen Master-Index des Backend-Systems entsprechend den bereits empfangen Nachrichten zum Zeitpunkt des letzten Nachrichtenaustauschs zwischen der jeweiligen mobilen Einheit und dem Backend-System besitzen, wobei das Verfahren bei nicht vorhandener Konnektivität zwischen der mindestens einen mobilen Einheit und dem Backend-System die folgenden Schritte ausführt:
a6) Herstellen eines ad-hoc Netzwerks zwischen den mindestens zwei mobilen Einheiten,
b6) Austauschen der lokalen Indexe, der Master-Indexe und der Empfangsindexe ,
c6) Löschen des älteren Empfangsindexes und des älteren Master-Indexes und Speichern des aktuelleren Empfangsindexes und des aktuelleren Master-Indexes,
d6) Aktualisieren der lokal gespeicherten Nachrichten aufgrund des aktuellen Master-Indexes und des aktuellen Empfangsindexes, und
e6) Senden von zusätzlichen in den lokalen Datenbanken der mobilen Einheiten befindlichen Nachrichten an die jeweils andere mobile Einheit.

12. Verfahren zur Übermittlung von Nachrichten von einem Backend-System an mindestens zwei mobile Einheiten, insbesondere an mindestens zwei Peers, bei eingeschränkter Konnektivität zwischen dem Backend-System und den mobilen Einheiten, wobei das Backend-System eine Master-Datenbank aufweist zum Speichern von Nachrichten an mindestens eine mobile Einheit, wobei das Backend-System einen Master-Index entsprechend den bereits gesendeten Nachrichten erstellt, wobei die mobile Einheit eine lokale Datenbank aufweist zum Speichern von Nachrichten und vorzugsweise zum Zwischenspeichern von Nachrichten an mindestens eine weitere mobile Einheit, wobei die mobile Einheit einen lokalen Index entsprechend den lokal gespeicherten Nachrichten und vorzugsweise der zwischengespeicherten Nachrichten erstellt, wobei die mobile Einheit einen Empfangsindex entsprechend den bereits empfangenen Nachrichten an die mobile Einheit erstellt und vorzugsweise mindestens einen weiteren Empfangsindex mindestens einer weiteren mobilen Einheit speichert, wobei die mobilen Einheiten jeweils einen Master-Index des Backend-Systems entsprechend den bereits empfangen Nachrichten zum Zeitpunkt des letzten Nachrichtenaustauschs zwischen der jeweiligen mobilen Einheit und dem Backend-System besitzen, wobei das Verfahren bei vorhandener Konnektivität zwischen mindestens einer mobilen Einheit und dem Backend-System sowohl die Schritte von Anspruch 8 als auch die Schritte von Anspruch 9 ausführt und wobei das Verfahren bei nicht vorhandener Konnektivität zwischen mindestens einer mobilen Einheit und dem Backend-System die Schritte von Anspruch 11 ausführt.

13. Vorrichtung zur Übermittlung von Daten oder Nachrichten zwischen mindestens zwei mobilen Einheiten, insbesondere mindestens zwei Peers, und/oder einem Backend-System bei eingeschränkter Konnektivität zwischen dem Backend-System und den mobilen Einheiten, insbesondere nach einem Verfahren nach einem der Ansprüche 1 bis 12, wobei die mobilen Einheiten folgende Komponenten umfassen:
a7) eine lokale Datenbank,
b7) eine Sende- und Empfangseinheit,
c7) eine Datenaustauschmanagement-Einheit, und
d7) eine Quittungsfile-Einheit.

14. Vorrichtung nach Anspruch 13, wobei die Quittungsfile-Einheit geeignet ist sowohl Informationen über die in der lokalen Datenbank der mobilen Einheit gespeicherten Daten in Form eines lokalen Indexes, als auch Informationen über die in einer Datenbank des Backend-Systems gespeicherten Daten in Form eines Master-Indexes zu speichern.

15. Vorrichtung nach einem der Ansprüche 13 oder 14, wobei die lokale Datenbank der mobilen Einheiten zum Speichern von eigenen Daten und vorzugsweise zum Zwischenspeichern von Daten mindestens einer weiteren mobilen Einheit an das Backend-System geeignet ist.

16. Vorrichtung nach einem der Ansprüche 14 bis 15, wobei die Datenaustauschmanagement-Einheit der mobilen Einheiten geeignet ist den lokalen Index entsprechend den gespeicherten eigenen Daten und vorzugsweise den zwischengespeicherten Daten zu erstellen.

17. Vorrichtung nach einem der Ansprüche 14 bis 16, wobei die Datenaustauschmanagement-Einheit geeignet ist sowohl den lokalen Index als auch den Master-Index auszulesen.

18. Vorrichtung nach Anspruch 17, wobei die Datenaustauschmanagement-Einheit geeignet ist Daten aus der lokalen Datenbank der mobilen Einheiten aufgrund des Inhaltes des Master-Indexes zu löschen.

19. Vorrichtung nach Anspruch 13, wobei die Quittungsfile-Einheit geeignet ist Informationen über die in der lokalen Datenbank der mobilen Einheit gespeicherten Nachrichten für andere mobile Einheiten in Form eines lokalen Indexes, Informationen über bereits empfangene Nachrichten der mobilen Einheit und vorzugsweise Informationen über bereits empfangene Nachrichten von mindestens einer weiteren mobilen Einheit in Form von Empfangsindexe und Informationen über die in einer Datenbank des Backend-Systems vorhandenen Nachrichten in Form eines Master-Indexes zu speichern.

20. Vorrichtung nach Anspruch 19, wobei die Datenaustauschmanagement-Einheit geeignet ist den Empfangsindex für die jeweilige mobile Einheit zu erstellen.

21. Vorrichtung nach einem der Ansprüche 19 oder 20, wobei die Datenaustauschmanagement-Einheit geeignet ist den lokalen Index für die jeweilige mobile Einheit zu erstellen.

22. Vorrichtung nach einem der Ansprüche 19 bis 21, wobei die Datenaustauschmanagement-Einheit geeignet ist den lokalen Index, die Empfangsindexe und den Master-Index auszulesen.

23. Vorrichtung zur Übermittlung von Daten oder Nachrichten zwischen mindestens zwei mobilen Einheiten, insbesondere mindestens zwei Peers, und einem Backend-System bei eingeschränkter Konnektivität zwischen dem Backend-System und den mobilen Einheiten, insbesondere nach einem Verfahren nach einem der Ansprüche 1 bis 12, wobei das Backend-System folgende Komponenten umfasst:
a8) eine Master-Datenbank,
b8) eine Sende- und Empfangseinheit,
c8) eine Datenaustauschmanagement-Einheit, und
d8) eine Quittungsfile-Einheit.

24. Vorrichtung nach Anspruch 23, wobei die Quittungsfile-Einheit geeignet ist Informationen über die in der Master-Datenbank des Backend-Systems gespeicherten Daten in Form eines Master-Indexes zu speichern.

25. Vorrichtung nach einem der Ansprüche 23 oder 24, wobei die Master-Datenbank des Backend-Systems zum Speichern von empfangenen Daten von mindestens einer mobilen Einheit an das Backend-System geeignet ist.

26. Vorrichtung nach einem der Ansprüche 24 bis 25, wobei die Datenaustauschmanagement-Einheit des Backend-Systems geeignet ist den Master-Index entsprechend den gespeicherten Daten zu erstellen.

27. Vorrichtung nach Anspruch 23, wobei die Quittungsfile-Einheit geeignet ist Informationen über die in der Master-Datenbank des Backend-Systems vorhandenen Nachrichten in Form eines Master-Indexes zu erstellen.

28. Vorrichtung nach einem der Ansprüche 23 oder 27, wobei die Datenaustauschmanagement-Einheit geeignet ist mindestens einen Empfangsindex von einer mobilen Einheit zu empfangen und auszulesen.

29. Vorrichtung nach Anspruch 28, wobei die Datenaustauschmanagement-Einheit geeignet ist Nachrichten aus der Master-Datenbank zu löschen aufgrund der Empfangsindexe der mobilen Einheiten.

## Claims

1. A method for transmitting data from at least one mobile unit, in particular from at least one peer, to a backend system if restricted connectivity is present between the mobile unit and the backend system, wherein the mobile unit comprises a local database for storing own data and preferably for buffering data of at least one further mobile unit, wherein the mobile unit generates a local index according to the stored own data and preferably the buffered data, wherein the backend system comprises a master database for storing received data from at least one mobile unit, wherein the backend system generates a master index according to the stored data, wherein the method carries out the following steps if connectivity is present between the at least one mobile unit and the backend system:
(a1) receiving the master index from the backend system,
(b1) deleting the data of the local database which are contained in the master database on the basis of a comparison of the local index with the master index and updating the local index,
(c1) transmitting data which are stored in the local database and which are not yet contained in the master database,
(d1) receiving and storing a new master index from the backend system, and
(e1) deleting the data of the local database transmitted in step (c1) on the basis of a comparison of the updated local index with the new master index and newly updating the local index.

2. A method for receiving data from at least one mobile unit, in particular from at least one peer, at a backend system if restricted connectivity is present between the mobile unit and the backend system, wherein the backend system comprises a master database for storing received data from at least one mobile unit, wherein the backend system generates a master index according to the stored data, wherein the method carries out the following steps if connectivity is present between the at least one mobile unit and the backend system:
(a2) transmitting the master index to the mobile unit,
(b2) receiving new data which are not contained in the master database from the mobile unit,
(c2) storing the new data in the master database,
(d2) updating the master index via the data stored in the master database, and
(e2) transmitting the new master index to the mobile unit.

3. A method for transmitting data from at least one mobile unit, in particular from at least one peer, to a backend system if restricted connectivity is present between the mobile unit and the backend system, wherein the mobile unit comprises a local database for storing own data and preferably for buffering data of at least one further mobile unit, wherein the mobile unit generates a local index according to the stored own data and preferably the buffered data, wherein the backend system comprises a master database for storing received data from at least one mobile unit, wherein the backend system generates a master index according to the stored data, wherein, if connectivity is present between the at least one mobile unit and the backend system, the method carries out both the steps of claim 1 and the steps of claim 2.

4. A method for exchanging data intended for a backend system between at least two mobile units, in particular between at least two peers, if restricted connectivity is present between the mobile units and the backend system, wherein the mobile units each comprise a local database for storing own data and preferably for buffering data of at least one further mobile unit, wherein the mobile units each generate a local index according to the stored own data and preferably the buffered data, wherein the mobile units each have a master index according to the stored data of the backend system at the time of the last data exchange between the respective mobile unit and the backend system, wherein the method carries out the following steps if there is no connectivity between the at least two mobile units and the backend system:
(a3) setting-up an ad-hoc network between the at least two mobile units,
(b3) exchanging the master indexes and the local indexes,
(c3) deleting the older one of the respective master indexes and storing the more current master index,
(d3) deleting the data from the local databases of the mobile units which have already been sent to the backend on the basis of a comparison of the current master index with the local indexes, and updating the respective local indexes,
(e3) updating the local indexes about the data stored in the local database of the respective local unit, and
(f3) transmitting additional data present in the local databases of the mobile units to the respective other mobile unit so that the local databases comprise identical data which have not yet been sent to the backend and newly updating the respective local indexes.

5. A method for transmitting data from at least two mobile units, in particular at least two peers, to a backend system if restricted connectivity is present between the mobile units and the backend system, wherein the backend system generates a master index according to the stored data, wherein the mobile units each comprise a local database for storing own data and preferably for buffering data of at least one further mobile unit, wherein the mobile units each generate a local index according to the stored own data and preferably the buffered data, wherein the mobile units each have a master index according to the stored data of the backend system at the time of the last data exchange between the respective mobile unit and the backend system, wherein, if connectivity is present between the at least one mobile unit and the backend system, the method carries out both the steps of claim 1 and the steps of claim 2 and wherein, if no connectivity is present between at least one mobile unit and the backend system, the method carries out the steps of claim 4.

6. The method according to any one of claims 1 to 5, wherein the master index of the backend system and the local index of the mobile unit are stored in an acknowledgement file.

7. The method according to any one of claims 4 to 6, wherein the ad-hoc network between the mobile units is set-up via WLAN or non-licensed ISM bands (industry, scientific, medical).

8. A method for transmitting messages from a backend system to at least one mobile unit, in particular at least one peer, if restricted connectivity is present between the mobile unit and the backend system, wherein the mobile unit comprises a local database for storing messages and preferably for buffering messages to at least one further mobile unit, wherein the mobile unit generates a local index according to the locally stored messages and preferably the buffered messages, wherein the mobile unit generates a reception index according to the already received messages to the mobile unit and preferably stores at least one further reception index of at least one further mobile unit, wherein the backend system comprises a master database for storing messages to at least one mobile unit, wherein the backend system generates a master index according to the already transmitted messages, wherein the method carries out the following steps if connectivity is present between the at least one mobile unit and the backend system:
(a4) transmitting the master index to the mobile unit connected to the backend system,
(b4) receiving at least one reception index and the local index,
(c4) deleting all already received messages from the master database of the backend system based on the at least one reception index,
(d4) transmitting messages which have not yet been received by the at least one mobile unit,
(e4) receiving an updated reception index from the mobile unit connected to the backend system,
(f4) deleting the messages transmitted in step (d4) from the master database based on the received updated reception index, and
(g4) updating the master index of the backend system.

9. A method for receiving messages from a backend system to at least one mobile unit, in particular at least one peer, if restricted connectivity is present between the mobile unit and the backend system, wherein the mobile unit comprises a local database for storing messages and preferably for buffering messages to at least one further mobile unit, wherein the mobile unit generates a local index according to the locally stored messages and preferably the buffered messages, wherein the mobile unit generates a reception index according to the already received messages to the mobile unit and preferably stores at least one further reception index of at least one further mobile unit, wherein the backend system comprises a master database for storing messages to at least one mobile unit, wherein the backend system generates a master index according to the already transmitted messages, wherein the method carries out the following steps if connectivity is present between the at least one mobile unit and the backend system:
(a5) receiving the master index of the backend system,
(b5) deleting the messages in the local database of the mobile unit based on the master index and updating the reception index of the mobile unit and preferably at least one further reception index of at least one further mobile unit,
(c5) transmitting the local index of the mobile unit and the at least one updated reception index,
(d5) receiving messages which have not yet been received by the connected mobile unit and preferably messages for at least one further mobile unit which have not yet been received by the mobile unit,
(e5) storing the received messages,
(f5) updating the reception index and the local index of the mobile unit, and
(g5) transmitting the updated reception index and the local index of the mobile unit to the backend system.

10. A method for transmitting messages from a backend system to at least one mobile unit, in particular to at least one peer, if restricted connectivity is present between the backend system and the mobile unit, wherein the mobile unit comprises a local database for storing messages and preferably for buffering messages to at least one further mobile unit, wherein the mobile unit generates a local index according to the locally stored messages and preferably the buffered messages, wherein the mobile unit generates a reception index according to the already received messages to the mobile unit and preferably stores at least one further reception index of at least one further mobile unit, wherein the backend system comprises a master database for storing messages to at least one mobile unit, wherein the backend system generates a master index according to the already transmitted messages, wherein, if connectivity is present between the at least one mobile unit and the backend system, the method carries out both the steps of claim 8 and the steps of claim 9.

11. A method for exchanging messages between a backend system and at least two mobile units, in particular at least two peers, if restricted connectivity is present between the mobile units and the backend system, wherein the mobile unit comprises a local database for storing messages and preferably for buffering messages to at least one further mobile unit, wherein the mobile unit generates a local index according to the locally stored messages and preferably the buffered messages, wherein the mobile unit generates a reception index according to the already received messages to the mobile unit and preferably stores at least one further reception index of at least one further mobile unit, wherein the mobile units each have a master index of the backend system according to the already received messages at the time of the last message exchange between the respective mobile unit and the backend system, wherein the method carries out the following steps if no connectivity is present between the at least one mobile unit and the backend system:
(a6) setting-up an ad-hoc network between the at least two mobile units,
(b6) exchanging the local indexes, the master indexes and the reception indexes,
(c6) deleting the older reception index and the older master index and storing the more current reception index and the more current master index,
(d6) updating the locally stored messages based on the current master index and the current reception index, and
(e6) transmitting messages additionally present in the local databases of the mobile units to the respective other mobile unit.

12. A method for transmitting messages from a backend system to at least two mobile units, in particular to at least two peers, if restricted connectivity is present between the backend system and the mobile units, wherein the backend system comprises a master database for storing messages to at least one mobile unit, wherein the backend system generates a master index according to the already transmitted messages, wherein the mobile unit comprises a local database for storing messages and preferably for buffering messages to at least one further mobile unit, wherein the mobile unit generates a local index according to the locally stored messages and preferably the buffered messages, wherein the mobile unit generates a reception index according to the already received messages to the mobile unit and preferably stores at least one further reception index of at least one further mobile unit, wherein the mobile units each have a master index of the backend system according to the already received messages at the time of the last message exchange between the respective mobile unit and the backend system, wherein, if connectivity is present between at least one mobile unit and the backend system, the method carries out both the steps of claim 8 and the steps of claim 9 and wherein, if no connectivity is present between at least one mobile unit and the backend system, the method carries out the steps of claim 11.

13. An apparatus for transmitting data or messages between at least two mobile units, in particular at least two peers, and/or a backend system, if restricted connectivity is present between the backend system and the mobile units, in particular in accordance with any of the methods according to any one of claims 1 to 12, wherein the mobile units comprise the following components:
(a7) a local database,
(b7) a transmitting and receiving unit,
(c7) a data exchange management unit, and
(d7) an acknowledgement file unit.

14. The apparatus according to claim 13, wherein the acknowledgement file unit is suitable for storing information about the data stored in the local database of the mobile unit in the form of a local index and also information about the data stored in a database of the backend system in the form of a master index.

15. The apparatus according to any one of claim 13 or 14, wherein the local database of the mobile units is suitable for storing own data and preferably for buffering data of at least one further mobile unit to the backend system.

16. The apparatus according to any one of claims 14 to 15, wherein the data exchange management unit of the mobile units is suitable for generating the local index according to the stored own data and preferably the buffered data.

17. The apparatus according to any one of claims 14 to 16, wherein the data exchange management unit is suitable for reading out both the local index and the master index.

18. The apparatus according to claim 17, wherein the data exchange management unit is suitable for deleting data from the local database of the mobile units based on the content of the master index.

19. The apparatus according to claim 13, wherein the acknowledgement file unit is suitable for storing information about the messages stored in the local database of the mobile unit for other mobile units in the form of a local index, information about already received messages of the mobile unit and preferably information about already received messages of at least one further mobile unit in the form of reception indexes, and information about the messages present in a database of the backend system in the form of a master index.

20. The apparatus according to claim 19, wherein the data exchange management unit is suitable for generating the reception index for the respective mobile unit.

21. The apparatus according to any one of claim 19 or 20, wherein the data exchange management unit is suitable for generating the local index for the respective mobile unit.

22. The apparatus according to any one of claims 19 to 21, wherein the data exchange management unit is further suitable for reading out the local index, the reception indexes and the master index.

23. An apparatus for transmitting data or messages between at least two mobile units, in particular at least two peers, and a backend system, if restricted connectivity is present between the backend system and the mobile units, in particular in accordance with any of the methods according to any one of claims 1 to 12, wherein the backend system comprises the following components:
(a8) a master database,
(b8) a transmitting and receiving unit,
(c8) a data exchange management unit, and
(d8) an acknowledgement file unit.

24. The apparatus according to claim 23, wherein the acknowledgement file unit is suitable for storing information about the data stored in the master database of the backend system in the form of a master index.

25. The apparatus according to any one of claim 23 or 24, wherein the master database of the backend system is suitable for storing received data from at least one mobile unit to the backend system.

26. The apparatus according to any one of claims 24 to 25, wherein the data exchange management unit of the backend system is suitable for generating the master index according to the stored data.

27. The apparatus according to claim 23, wherein the acknowledgement file unit is suitable for generating information about the messages present in the master database of the backend system in the form of a master index.

28. The apparatus according to any one of claim 23 or 27, wherein the data exchange management unit is suitable for receiving and reading out at least one reception index from a mobile unit.

29. The apparatus according to claim 28, wherein the data exchange management unit is suitable for deleting messages from the master database based on the reception indexes of the mobile units.

## Revendications

1. Procédé destiné à la transmission de données en provenance d'au moins une unité mobile, en particulier d'au moins un pair, vers un système de gestion dans le cas d'une connectivité limitée entre l'unité mobile et le système de gestion, dans lequel l'unité mobile présente une base de données locale en vue de l'enregistrement de ses propres données et de préférence en vue de la mise en mémoire tampon de données issues d'au moins une autre unité mobile, dans lequel l'unité mobile crée un index local correspondant à ses propres données enregistrées et correspondant de préférence à ses données mises en mémoire tampon, dans lequel le système de gestion présente une base de données maître en vue de l'enregistrement de données reçues d'au moins une unité mobile, dans lequel le système de gestion crée un maître index correspondant aux données enregistrées, dans lequel le procédé réalise les phases suivantes quand la connectivité est établie entre l'au moins une unité mobile et le système de gestion :
a1) réception du maître index par le système de gestion ;
b1) suppression des données de la base de données locale qui se trouvent dans la base de données maître, en établissant une comparaison entre l'index local et le maître index et en mettant à jour l'index local ;
c1) transmission des données enregistrées dans la base de données locale qui ne se trouvent pas encore dans la base de données maître ;
d1) réception et enregistrement d'un nouveau maître index par le système de gestion ; et
e1) suppression des données de la base de données locale transmises durant la phase c1), en établissant une comparaison entre l'index local mis à jour et le nouveau maître index et en procédant à une nouvelle mise à jour de l'index local.

2. Procédé destiné à la réception de données en provenance d'au moins une unité mobile, en particulier d'au moins un pair, vers un système de gestion dans le cas d'une connectivité limitée entre l'unité mobile et le système de gestion, dans lequel le système de gestion présente une base de données maître en vue de l'enregistrement de données reçues en provenance d'au moins une unité mobile, dans lequel le système de gestion crée un maître index correspondant aux données enregistrées, dans lequel le procédé réalise les phases suivantes quand la connectivité est établie entre l'au moins une unité mobile et le système de gestion :
a2) transmission du maître index vers l'unité mobile ;
b2) réception de nouvelles données par l'unité mobile qui ne se trouvent pas dans la base de données maître ;
c2) enregistrement des nouvelles données dans la base de données maître ;
d2) mise à jour du maître index par l'intermédiaire des données enregistrées dans la base de données maître ; et
e2) transmission du nouveau maître index vers l'unité mobile.

3. Procédé destiné à la transmission de données en provenance d'au moins une unité mobile, en particulier d'au moins un pair, vers un système de gestion dans le cas d'une connectivité limitée entre l'unité mobile et le système de gestion, dans lequel l'unité mobile présente une base de données locale en vue de l'enregistrement de ses propres données et de préférence en vue de la mise en mémoire tampon de données d'au moins une autre unité mobile, dans lequel l'unité mobile crée un index local correspondant à ses propres données enregistrées et correspondant de préférence à ses données mises en mémoire tampon, dans lequel le système de gestion présente une base de données maître en vue de l'enregistrement de données reçues en provenance d'au moins une unité mobile, dans lequel le système de gestion crée un maître index correspondant aux données enregistrées, dans lequel le procédé réalise aussi bien les phases de la revendication 1 que les phases de la revendication 2, quand la connectivité est établie entre l'au moins une unité mobile et le système de gestion.

4. Procédé destiné à l'échange de certaines données pour un système de gestion entre au moins deux unités mobiles, en particulier entre au moins deux pairs, dans le cas d'une connectivité limitée entre les unités mobiles et le système de gestion, dans lequel les unités mobiles présentent respectivement une base de données locale en vue de l'enregistrement de leurs propres données et de préférence en vue de la mise en mémoire tampon de données d'au moins une autre unité mobile, dans lequel les unités mobiles créent respectivement un index local correspondant à leurs propres données enregistrées et correspondant de préférence à leurs données mises en mémoire tampon, dans lequel les unités mobiles possèdent respectivement un maître index correspondant aux données enregistrées du système de gestion au moment du dernier échange de données entre l'unité mobile respective et le système de gestion, dans lequel le procédé réalise les phases suivantes quand la connectivité n'est pas établie entre les au moins deux unités mobiles et le système de gestion :
a3) mise en place d'un réseau ad-hoc entre les au moins deux unités mobiles ;
b3) remplacement des maîtres index et des index locaux ;
c3) suppression du plus ancien parmi les maîtres index respectifs et enregistrement du maître index mis à jour en dernier ;
d3) suppression des données en provenance des bases de données locales des unités mobiles qui ont déjà été envoyées au système de gestion, en établissant une comparaison entre le maître index mis à jour et les index locaux, et mise à jour des index locaux respectifs ;
e3) mise à jour des index locaux par l'intermédiaire des données enregistrées dans la base de données locale de l'unité mobile respective ; et
f3) transmission de données supplémentaires se trouvant dans les bases de données locales des unités mobiles vers l'autre unité mobile respective, de telle sorte que les bases de données locales contiennent des données identiques qui n'ont pas encore envoyées au système de gestion et nouvelle mise à jour des index locaux respectifs.

5. Procédé destiné à la transmission de données en provenance d'au moins deux unités mobiles, en particulier d'au moins deux pairs, vers un système de gestion dans le cas d'une connectivité limitée entre les unités mobiles et le système de gestion, dans lequel le système de gestion crée un maître index correspondant aux données enregistrées, dans lequel les unités mobiles présentent respectivement une base de données locale en vue de l'enregistrement de leurs propres données et de préférence en vue de la mise en mémoire tampon de données d'au moins une autre unité mobile, dans lequel les unités mobiles créent respectivement un index local correspondant à leurs propres données enregistrées et correspondant de préférence à leurs données mises en mémoire tampon, dans lequel les unités mobiles possèdent respectivement un maître index correspondant aux données enregistrées du système de gestion au moment du dernier échange de données entre l'unité mobile respective et le système de gestion, dans lequel le procédé réalise aussi bien les phases de la revendication 1 que les phases de la revendication 2, quand la connectivité est établie entre au moins une unité mobile et le système de gestion, et dans lequel le procédé réalise les phases de la revendication 4, quand la connectivité n'est pas établie entre au moins une unité mobile et le système de gestion.

6. Procédé selon l'une quelconque des revendications 1 à 5, dans lequel le maître index du système de gestion et l'index local de l'unité mobile sont enregistrés dans un fichier de quittance.

7. Procédé selon l'une quelconque des revendications 4 à 6, dans lequel le réseau ad-hoc est mis en place entre les unités mobiles par l'intermédiaire d'un réseau sans fil (WLAN) ou de bandes ISM (Industry, Scientific, Medical) qui ne sont pas sous licence.

8. Procédé destiné à la transmission de messages en provenance d'un système de gestion vers au moins une unité mobile, en particulier vers au moins un pair, dans le cas d'une connectivité limitée entre l'unité mobile et le système de gestion, dans lequel l'unité mobile présente une base de données locale en vue de l'enregistrement de messages et de préférence en vue de la mise en mémoire tampon de messages vers au moins une autre unité mobile, dans lequel l'unité mobile crée un index local correspondant aux messages locaux enregistrées et correspondant de préférence aux messages mis en mémoire tampon, dans lequel l'unité mobile crée un index de réception correspondant aux messages déjà reçus vers l'unité mobile et enregistre de préférence au moins un autre index de réception d'au moins une autre unité mobile, dans lequel le système de gestion présente une base de données maître en vue de l'enregistrement de messages vers au moins une unité mobile, dans lequel le système de gestion crée un maître index correspondant aux messages déjà transmis, dans lequel le procédé réalise les phases suivantes quand la connectivité est établie entre l'au moins une unité mobile et le système de gestion :
a4) transmission du maître index vers l'unité mobile connectée avec le système de gestion ;
b4) réception d'au moins un index de réception et de l'index local ;
c4) suppression de tous les messages déjà reçus en provenance de la base de données maître du système de gestion, sur la base de l'au moins un index de réception ;
d4) transmission de messages qui n'ont pas encore été reçus par l'au moins une unité mobile ;
e4) réception d'un index de réception mis à jour par l'unité mobile connectée avec le système de gestion ;
f4) suppression des messages transmis durant la phase d4) en provenance de la base de données maître, sur la base de l'index de réception reçu et mis à jour ; et
g4) mise à jour du maître index du système de gestion.

9. Procédé destiné à la réception de messages en provenance d'un système de gestion vers au moins une unité mobile, en particulier vers au moins un pair, dans le cas d'une connectivité limitée entre l'unité mobile et le système de gestion, dans lequel l'unité mobile présente une base de données locale en vue de l'enregistrement de messages et de préférence en vue de la mise en mémoire tampon de messages vers au moins une autre unité mobile, dans lequel l'unité mobile crée un index local correspondant aux messages locaux enregistrés et correspondant de préférence à la mise en mémoire tampon de messages, dans lequel l'unité mobile crée un index de réception correspondant aux messages déjà reçus vers l'unité mobile et enregistre de préférence au moins un autre index de réception d'au moins une autre unité mobile, dans lequel le système de gestion présente une base de données maître en vue de l'enregistrement de messages vers au moins une unité mobile, dans lequel le système de gestion crée un maître index correspondant aux messages déjà transmis, dans lequel le procédé réalise les phases suivantes quand la connectivité est établie entre l'au moins une unité mobile et le système de gestion :
a5) réception du maître index du système de gestion ;
b5) suppression des messages dans la base de données locale de l'unité mobile sur la base du maître index et mise à jour de l'index de réception de l'unité mobile et mise à jour de préférence d'au moins un autre index de réception d'au moins une autre unité mobile ;
c5) transmission de l'index local de l'unité mobile et de l'au moins un index de réception mis à jour ;
d5) réception de messages qui n'ont pas encore été reçus par l'unité mobile connectée et de préférence réception de messages pour au moins une autre unité mobile qui n'ont pas encore été reçus par l'unité mobile ;
e5) enregistrement des messages reçus ;
f5) mise à jour de l'index de réception et de l'index local de l'unité mobile ; et
g5) transmission de l'index de réception mis à jour et de l'index local de l'unité mobile vers le système de gestion.

10. Procédé destiné à la transmission de messages en provenance d'un système de gestion vers au moins une unité mobile, en particulier vers au moins un pair, dans le cas d'une connectivité limitée entre le système de gestion et l'unité mobile, dans lequel l'unité mobile présente une base de données locale en vue de l'enregistrement de messages et de préférence en vue de la mise en mémoire tampon de messages vers au moins une autre unité mobile, dans lequel l'unité mobile crée un index local correspondant aux messages locaux enregistrés et correspondant de préférence aux messages mis en mémoire tampon, dans lequel l'unité mobile crée un index de réception correspondant aux messages déjà reçus vers l'unité mobile et enregistre de préférence au moins un autre index de réception d'au moins une autre unité mobile, dans lequel le système de gestion présente une base de données maître en vue de l'enregistrement de messages vers au moins une unité mobile, dans lequel le système de gestion crée un maître index correspondant aux messages déjà transmis, dans lequel le procédé réalise aussi bien les phases de la revendication 8 que les phases de la revendication 9, quand la connectivité est établie entre l'au moins une unité mobile et le système de gestion.

11. Procédé destiné à l'échange de messages entre un système de gestion et au moins deux unités mobiles, en particulier au moins deux pairs, dans le cas d'une connectivité limitée entre les unités mobiles et le système de gestion, dans lequel l'unité mobile présente une base de données locale en vue de l'enregistrement de messages et de préférence en vue de la mise en mémoire tampon de messages vers au moins une autre unité mobile, dans lequel l'unité mobile crée un index local correspondant aux messages enregistrés localement et correspondant de préférence aux messages mis en mémoire tampon, dans lequel l'unité mobile crée un index de réception correspondant aux messages déjà reçus vers l'unité mobile et enregistre de préférence au moins un autre index de réception d'au moins une autre unité mobile, dans lequel les unités mobiles possèdent respectivement un maître index du système de gestion correspondant aux messages déjà reçus au moment du dernier échange de messages entre l'unité mobile respective et le système de gestion, dans lequel le procédé réalise les phases suivantes quand la connectivité n'est pas établie entre l'au moins une unité mobile et le système de gestion :
a6) mise en place d'un réseau ad-hoc entre les au moins deux unités mobiles ;
b6) remplacement des index locaux, des maîtres index et des index de réception ;
c6) suppression du plus ancien index de réception et du plus ancien maître index et enregistrement de l'index de réception mis à jour en dernier et du maître index mis à jour en dernier ;
d6) mise à jour des messages enregistrés localement sur la base du maître index mis à jour et de l'index de réception mis à jour ; et
e6) transmission de messages supplémentaire se trouvant dans les bases de données locales des unités mobiles vers l'autre unité mobile respective.

12. Procédé destiné à la transmission de messages en provenance d'un système de gestion vers au moins deux unités mobiles, en particulier vers au moins deux pairs, quand la connectivité est limitée entre le système de gestion et les unités mobiles, dans lequel le système de gestion présente une base de données maître en vue de l'enregistrement de messages vers au moins une unité mobile, dans lequel le système de gestion crée un maître index correspondant aux messages déjà transmis, dans lequel l'unité mobile présente une base de données locale en vue de l'enregistrement de messages et de préférence en vue de la mise en mémoire tampon de messages vers au moins une autre unité mobile, dans lequel l'unité mobile crée un index local correspondant aux messages enregistrés localement et correspondant de préférence aux messages mis en mémoire tampon, dans lequel l'unité mobile crée un index de réception correspondant aux messages déjà reçus vers l'unité mobile et enregistre de préférence au moins un autre index de réception d'au moins une autre unité mobile, dans lequel les unités mobiles possèdent respectivement un maître index du système de gestion correspondant aux messages déjà reçus au moment du dernier échange de messages entre l'unité mobile respective et le système de gestion, dans lequel le procédé réalise aussi bien les phases de la revendication 8 que les phases de la revendication 9, quand la connectivité est établie entre au moins une unité mobile et le système de gestion, et dans lequel le procédé réalise les phases de la revendication 11, quand la connectivité n'est pas établie entre au moins une unité mobile et le système de gestion.

13. Dispositif destiné à la transmission de données ou de messages entre au moins deux unités mobiles, en particulier entre au moins deux pairs, et/ou un système de gestion, quand la connectivité est limitée entre le système de gestion et les unités mobiles, en particulier conformément à un procédé selon l'une quelconque des revendications 1 à 12, dans lequel les unités mobiles comprennent les composants suivants :
a7) une base de données locale ;
b7) une unité de transmission et de réception ;
c7) une unité de gestion pour les échanges de données ; et
d7) une unité de fichiers de quittance.

14. Dispositif selon la revendication 13, dans lequel l'unité de fichiers de quittance est adaptée aussi bien pour enregistrer des informations sur les données enregistrées dans la base de données locale de l'unité mobile, sous la forme d'un index local, que pour enregistrer des informations sur les données enregistrées dans une base de données du système de gestion, sous la forme d'un maître index.

15. Dispositif selon l'une quelconque des revendications 13 ou 14, dans lequel la base de données locale des unités mobiles est adaptée en vue de l'enregistrement de leurs propres données et de préférence en vue de la mise en mémoire tampon de données en provenance d'au moins une autre unité mobile vers le système de gestion.

16. Dispositif selon l'une quelconque des revendications 14 à 15, dans lequel l'unité de gestion pour les échanges de données des unités mobiles est adaptée pour la création de l'index local correspondant à leurs propres données enregistrées et correspondant de préférence à leurs données mises en mémoire tampon.

17. Dispositif selon l'une quelconque des revendications 14 à 16, dans lequel l'unité de gestion pour les échanges de données est adaptée pour la lecture aussi bien de l'index local que du maître index.

18. Dispositif selon la revendication 17, dans lequel l'unité de gestion pour les échanges de données est adaptée pour la suppression des données en provenance de la base de données locale des unités mobiles sur la base du contenu du maître index.

19. Dispositif selon la revendication 13, dans lequel l'unité de fichiers de quittance est adaptée pour enregistrer des informations sur les messages enregistrés dans la base de données locale de l'unité mobile à l'attention d'autres unités mobiles, sous la forme d'un index local, pour enregistrer des informations sur des messages déjà reçus de l'unité mobile et de préférence pour enregistrer des informations sur des messages déjà reçus en provenance d'au moins une autre unité mobile, sous la forme d'index de réception, ainsi que pour enregistrer des informations sur les messages présents dans une base de données du système de gestion, sous la forme d'un maître index.

20. Dispositif selon la revendication 19, dans lequel l'unité de gestion pour les échanges de données est adaptée pour la création de l'index de réception pour l'unité mobile respective.

21. Dispositif selon l'une quelconque des revendications 19 ou 20, dans lequel l'unité de gestion pour les échanges de données est adaptée pour la création de l'index local pour l'unité mobile respective.

22. Dispositif selon l'une quelconque des revendications 19 à 21, dans lequel l'unité de gestion pour les échanges de données est adaptée pour la lecture de l'index local, des index de réception et du maître index.

23. Dispositif destiné à la transmission de données ou de messages entre au moins deux unités mobiles, en particulier entre au moins deux pairs, et un système de gestion, quand la connectivité est limitée entre le système de gestion et les unités mobiles, en particulier conformément à un procédé selon l'une quelconque des revendications 1 à 12, dans lequel le système de gestion comprend les composants suivants :
a8) une base de données maître ;
b8) une unité de transmission et de réception ;
c8) une unité de gestion pour les échanges de données ; et
d8) une unité de fichiers de quittance.

24. Dispositif selon la revendication 23, dans lequel l'unité de fichiers de quittance est adaptée pour enregistrer des informations sur les données enregistrées dans la base de données maître du système de gestion, sous la forme d'un maître index.

25. Dispositif selon l'une quelconque des revendications 23 ou 24, dans lequel la base de données maître du système de gestion est adaptée en vue de l'enregistrement de données reçues en provenance d'au moins une unité mobile vers le système de gestion.

26. Dispositif selon l'une quelconque des revendications 24 à 25, dans lequel l'unité de gestion pour les échanges de données du système de gestion est adaptée pour la création du maître index correspondant aux données enregistrées.

27. Dispositif selon la revendication 23, dans lequel l'unité de fichiers de quittance est adaptée pour créer des informations sur les messages présents dans la base de données maître du système de gestion, sous la forme d'un maître index.

28. Dispositif selon l'une quelconque des revendications 23 ou 27, dans lequel l'unité de gestion pour les échanges de données est adaptée pour la réception et pour la lecture d'au moins un index de réception d'une unité mobile.

29. Dispositif selon la revendication 28, dans lequel l'unité de gestion pour les échanges de données est adaptée pour la suppression des messages de la base de données maître sur la base des index de réception des unités mobiles.
